(19) Europäisches Patentamt / European Patent Office / Office européen des brevets

(11) **EP 4 041 997 B1**

(12) **FASCICULE DE BREVET EUROPEEN**

(45) Date de publication et mention de la délivrance du brevet:
**07.06.2023 Bulletin 2023/23**

(21) Numéro de dépôt: **20790369.1**

(22) Date de dépôt: **24.09.2020**

(51) Classification Internationale des Brevets (IPC):
*F01M 11/10* $^{(2006.01)}$    *F02D 41/22* $^{(2006.01)}$

(52) Classification Coopérative des Brevets (CPC):
**F01M 11/10; F02D 41/22;** F01M 2011/1413;
F01M 2011/1446; F01M 2011/146;
F01M 2011/1473; F02D 2250/11; F16N 2200/04;
Y02T 10/40

(86) Numéro de dépôt international:
**PCT/FR2020/051660**

(87) Numéro de publication internationale:
**WO 2021/069811 (15.04.2021 Gazette 2021/15)**

(54) **SYSTÈME DE SURVEILLANCE D'UN MOTEUR**

SYSTEM ZUR ÜBERWACHUNG EINES MOTORS

SYSTEM FOR MONITORING AN ENGINE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.10.2019 FR 1911183**

(43) Date de publication de la demande:
**17.08.2022 Bulletin 2022/33**

(73) Titulaire: **Man Energy Solutions France
44600 Saint-Nazaire (FR)**

(72) Inventeur: **RIVIERE, Frédéric Ghislain Patrice
44390 Nort-sur-Erdre (FR)**

(74) Mandataire: **Cabinet Beau de Loménie
158, rue de l'Université
75340 Paris Cedex 07 (FR)**

(56) Documents cités:
WO-A1-2018/165302     DE-A1-102013 005 003
JP-B2- 5 558 337      US-A- 5 964 318
US-A1- 2004 099 050   US-A1- 2008 302 606
US-A1- 2018 051 793   US-A1- 2019 156 600

EP 4 041 997 B1

**Description**

Domaine Technique

L'invention porte sur le domaine de la surveillance d'un moteur et porte plus particulièrement sur la détection d'états anormaux susceptibles d'affecter un moteur lors de son fonctionnement.
L'invention vise notamment à détecter certains disfonctionnements, avaries, dégradations et/ou déviations de fonctionnement pouvant affecter un moteur, en vue notamment de les prévenir ou de les traiter de façon appropriée, et ainsi maintenir le moteur en condition opérationnelle.

Technique antérieure

Les moteurs mécaniques, de type moteur à combustion interne ou moteur électrique, sont omniprésents dans l'industrie moderne et plus généralement dans les appareils et machines du quotidien. A titre d'exemple, un grand nombre de véhicules (voitures, trains, navires...) ou encore d'appareils industriels sont équipés d'un moteur mécanique pour réaliser une fonction mécanique donnée (rotation des roues d'un véhicule par exemple).
De façon bien connue, un moteur utilise une source d'énergie (chaleur dégagée par la combustion interne d'un carburant ou source d'énergie électrique) pour mouvoir au moins un piston dans un cylindre, ce mouvement de translation étant transformé en rotation par un système bielle-manivelle. La rotation de l'arbre du moteur permet d'entraîner un équipement quelconque via un mécanisme de transmission.
Il existe aujourd'hui des types de moteur très variés en raison des nombreux progrès accomplis en la matière au cours du temps. La complexité d'un moteur peut varier de façon importante selon l'application considérée. De manière générale, un moteur peut être affecté par de nombreuses pannes ou états anormaux au cours de sa vie de fonctionnement. Afin d'identifier, et si possible prévenir les pannes ou disfonctionnements, et ainsi maintenir en condition opérationnelle un moteur, il est donc nécessaire de surveiller son état avec attention.
Il convient en particulier de faire régulièrement de la maintenance sur un moteur afin de s'assurer qu'il est dans un bon état opérationnel et, si besoin, pour réparer, remplacer ou ajuster certaines pièces ou systèmes.
En particulier, diverses dégradations, fuites, usures, ruptures, déviations de fonctionnement ou autres sont susceptibles d'impacter le bon fonctionnement d'un moteur. On peut citer à titre d'exemple des problèmes liés au système d'injection de carburant qui se manifestent par la dilution du carburant dans l'huile de lubrification et peuvent causer une rupture du film d'huile avec une usure prématurée des pièces mécaniques, une casse du moteur voire l'explosion du moteur.
Or, les techniques de surveillance et de maintenance actuelles ne permettent pas de détecter et d'identifier de manière satisfaisante certaines pannes ou états anormaux affectant un moteur, ou dans certains cas ces techniques permettent tout au plus une détection tardive, ce qui ne permet pas de traiter le problème de façon efficace. US5964318 A décrit un exemple de technique de surveillance actuelle.
Un besoin existe pour une solution permettant de détecter un état anormal dans un moteur à un stade précoce et d'identifier le type de panne, disfonctionnement, avarie, anomalie, ou autre, affectant le moteur afin de pouvoir traiter le problème rapidement et de façon efficace.
De manière générale, il est nécessaire de surveiller l'évolution de l'état d'un moteur pour déterminer s'il se trouve dans des conditions opérationnelles ou si ses performances sont dégradées en raison d'un disfonctionnement quelconque. Il convient que cette surveillance soit aisée, rapide et fiable afin de réaliser une maintenance efficace du moteur.

Exposé de l'invention

A cet effet, la présente invention concerne un système de surveillance pour surveiller un moteur comprenant :

-   une unité de capteur raccordée à une canalisation d'entrée et à une canalisation de sortie, la canalisation d'entrée comprenant un connecteur de tuyauterie hydraulique configuré pour se connecter à un circuit d'huile dudit moteur, ladite unité de capteur comprenant au moins un capteur configuré pour mesurer des premiers paramètres représentatifs de la qualité d'une huile de lubrification de moteur prélevée dans le circuit d'huile via la canalisation d'entrée, la canalisation de sortie étant apte à évacuer l'huile depuis l'unité de capteur dans le circuit d'huile ;
-   une unité d'analyse configuré pour déterminer, à partir des premiers paramètres ou de deuxièmes paramètres obtenus par un traitement des premiers paramètres, si au moins une condition prédéfinie est satisfaite, en comparant lesdits premiers ou deuxièmes paramètres avec au moins une valeur seuil ; et
-   une unité de détection configurée pour détecter une dégradation de la qualité de l'huile représentative d'un état anormal du moteur, si ladite au moins une condition prédéfinie est satisfaite.

L'invention permet de surveiller l'état d'un moteur mécanique à partir de la qualité de l'huile circulant dans le circuit d'huile du moteur. A partir de la mesure de paramètres représentatifs de la qualité de l'huile, le système de l'invention est capable de détecter une éventuelle dégradation et/ou pollution de la qualité de l'huile indiquant un état anormal du moteur. Cette surveillance peut être réalisée en continu, ou de manière périodique ou régulière, de façon à monitorer l'état opérationnel du moteur alors même que celui-ci fonctionne.

L'invention permet de détecter de façon précoce (voire en temps réel) des disfonctionnements, anomalies, avaries, déviations de fonctionnement ou autres qu'un moteur est susceptible de rencontrer au cours de son cycle de vie.

L'invention permet en particulier de vérifier si un moteur se trouve dans des conditions opérationnelles ou si ses performances sont dégradées en raison d'un disfonctionnement quelconque. Grâce à l'invention, une surveillance aisée, rapide et fiable d'un moteur peut être réalisée, ce qui permet d'effectuer si besoin une maintenance efficace du moteur.

Selon un mode de réalisation particulier, le système de surveillance comprend une unité de contrôle configurée, sur détection de ladite au moins une dégradation de la qualité de l'huile, pour déclencher au moins une action prédéfinie pour sécuriser le moteur.

Selon un mode de réalisation particulier, ladite au moins une action comprend au moins l'un quelconque parmi :

- transmission ou présentation d'une notification représentative de la dégradation de la qualité de l'huile ; et
- déclenchement d'un envoi, par une unité de commande, d'une commande pour modifier au moins un paramètre de fonctionnement du moteur.

Selon un mode de réalisation particulier, les premiers paramètres mesurés par ledit au moins un capteur comprennent au moins le paramètre suivant : humidité relative de l'huile. Autrement dit, au moins l'humidité relative de l'huile est mesurée en tant que première paramètre, en combinaison éventuellement à un ou d'autres premiers paramètres, par exemple parmi ceux mentionnés ci-après.

Selon un mode de réalisation particulier, les premiers paramètres mesurés par ledit au moins un capteur comprennent les paramètres suivants :

- conductivité électrique de l'huile ;
- constante diélectrique de l'huile ;
- température de l'huile ;
- pression de l'huile ; et
- humidité relative de l'huile.

Selon un mode de réalisation particulier, les premiers paramètres comprennent au moins un paramètre caractérisant des particules métalliques susceptibles d'être présentes dans l'huile.

Selon l'invention, ledit traitement réalisé par l'unité d'analyse comprend au moins l'un parmi :

- détermination, en tant que deuxième paramètre, d'une conductivité électrique corrigée à partir de la conductivité électrique mesurée par ledit au moins un capteur en appliquant une première fonction polynomiale finale, la première fonction polynomiale finale définissant ladite conductivité électrique corrigée à partir de la conductivité électrique, la température, la pression et l'humidité relative mesurées par ledit au moins un capteur, ladite première fonction polynomiale finale étant pondérée par des premiers coefficients associés respectivement à la température, la pression et l'humidité relative pour compenser au moins en partie l'influence respective de la température, de la pression et de l'humidité relative sur la conductivité électrique mesurée par ledit au moins un capteur ; et
- détermination, en tant que deuxième paramètre, d'une constante diélectrique corrigée à partir de la constante diélectrique mesurée par ledit au moins un capteur en appliquant une deuxième fonction polynomiale finale, la deuxième fonction polynomiale finale définissant la constante diélectrique corrigée à partir de la constante diélectrique, la température, la pression et l'humidité relative mesurées par ledit au moins un capteur, ladite deuxième fonction polynomiale finale étant pondérée par des deuxièmes coefficients associés respectivement à la température, la pression et de l'humidité relative pour compenser au moins en partie l'influence respective de la température, de la pression et de l'humidité relative sur la constante diélectrique mesurée par ledit au moins un capteur ;
  dans lequel le module d'analyse est configuré pour comparer au moins l'un parmi la conductivité électrique corrigée et la constante diélectrique corrigée avec un seuil respectif pour déterminer si ladite au moins une condition prédéfinie est satisfaite.

Selon un mode de réalisation particulier, le module d'analyse est configuré pour déterminer la conductivité électrique corrigée et la constante diélectrique corrigée lors dudit traitement, ladite au moins une condition prédéfinie comprenant les conditions suivantes :

- la conductivité diélectrique corrigée atteint un premier seuil ; et
- la constante diélectrique corrigée atteint un deuxième seuil.

Selon un mode de réalisation particulier, le système de surveillance comprend une unité de calibration configuré pour déterminer, préalablement à ladite analyse, les premiers et deuxièmes coefficients pondérant respectivement les première et deuxième fonctions polynomiales finales, ladite unité de calibration étant configurée pour réaliser les étapes suivantes :

- détermination d'une première fonction polynomiale f1CE-T représentant l'évolution de la conductivité électrique mesurée par ledit au moins un capteur en fonction de la température mesurée par ledit au moins un capteur ;
- détermination d'une première fonction polynomiale f1CE-P représentant l'évolution de la conductivité électrique mesurée par ledit au moins un capteur en fonction de la pression mesurée par ledit au moins un capteur ;
- détermination d'une première fonction polynomiale f1CE-HR représentant l'évolution de la conductivité électrique mesurée par ledit au moins un capteur en fonction de l'humidité relative mesurée par ledit au moins un capteur ;
- détermination d'une première fonction polynomiale f1CD-T représentant l'évolution de la constante diélectrique mesurée par ledit au moins un capteur en fonction de la température mesurée par ledit au moins un capteur ;
- détermination d'une première fonction polynomiale f1CD-P représentant l'évolution de la constante diélectrique mesurée par ledit au moins un capteur en fonction de la pression mesurée par ledit au moins un capteur ;
- détermination d'une première fonction polynomiale f1CD-HR représentant l'évolution de la constante diélectrique mesurée par ledit au moins un capteur en fonction de l'humidité relative mesurée par ledit au moins un capteur ;
- détermination, à partir de la première fonction polynomiale f1CE-T, d'une deuxième fonction polynomiale f2CE-T définissant une correction CRCE-T de la conductivité électrique en fonction de la température, ladite deuxième fonction polynomiale f2CE-T étant pondérée par desdits premiers coefficients définissant ladite correction CRCE-T de sorte à ce qu'elle soit nulle à une température de référence ;
- détermination, à partir de la première fonction polynomiale f1CE-P, d'une deuxième fonction polynomiale f2CE-P définissant une correction CRCE-P de la conductivité électrique en fonction de la pression, ladite deuxième fonction polynomiale f2CE-P étant pondérée par desdits premiers coefficients définissant ladite correction de sorte à ce qu'elle soit nulle à une pression de référence ;
- détermination, à partir de la première fonction polynomiale f1CE-HR, d'une deuxième fonction polynomiale f2CE-HR définissant une correction CRCE-HR de la conductivité électrique en fonction de l'humidité relative, ladite deuxième fonction polynomiale f2CE-HR étant pondérée par desdits premiers coefficients définissant ladite correction de sorte à ce qu'elle soit nulle à une humidité relative de référence ;
- détermination, à partir de la première fonction polynomiale f1CD-T, d'une deuxième fonction polynomiale f2CD-T définissant une correction CRCD-T de la constante diélectrique en fonction de la température, ladite deuxième fonction polynomiale f2CD-T étant pondérée par desdits deuxièmes coefficients définissant ladite correction de sorte à ce qu'elle soit nulle à la température de référence ;
- détermination, à partir de la première fonction polynomiale f1CD-P, d'une deuxième fonction polynomiale f2CD-P définissant une correction CRCD-P de la constante diélectrique en fonction de la pression, ladite deuxième fonction polynomiale f2CD-P étant pondérée par desdits deuxièmes coefficients définissant ladite correction de sorte à ce qu'elle soit nulle à la pression de référence ; et
- détermination, à partir de la première fonction polynomiale f1CD-HR, d'une deuxième fonction polynomiale f2CD-HR définissant une correction CRCD-HR de la constante diélectrique en fonction de l'humidité relative, ladite deuxième fonction polynomiale f2CD-HR étant pondérée par desdits deuxièmes coefficients définissant ladite correction de sorte à ce qu'elle soit nulle à l'humidité relative de référence ;

dans lequel le module d'analyse est configuré pour appliquer lesdits premiers et deuxièmes coefficients dans respectivement les première et deuxième fonctions polynomiales finales pour déterminer lors du traitement la conductivité électrique corrigée et la constante diélectrique corrigée en tant que de deuxièmes paramètres.

Selon un mode de réalisation particulier, le module d'analyse est configuré pour réaliser lors d'une phase d'apprentissage :

- détermination d'une conductivité électrique initiale corrigée et d'une constante diélectrique initiale corrigée à partir respectivement de la conductivité électrique et de la constante diélectrique mesurées par ledit au moins un capteur dans un état de référence du circuit d'huile ;
- dans lequel le module d'analyse est en outre configuré pour réaliser, lors dudit traitement :
- calcul d'une première déviation entre une conductivité électrique corrigée déterminée à un instant courant par rapport à la conductivité électrique initiale corrigée et d'une deuxième déviation entre une constante diélectrique corrigée déterminée à un instant courant par rapport la constante diélectrique initiale corrigée ; et

- détermination que ladite au moins une condition prédéfinie est satisfaite si au moins l'une parmi les première et deuxième déviations atteint un seuil prédéfini.

Selon un mode de réalisation particulier, le système de surveillance est tel que :

- si la première déviation atteint un premier seuil minimum prédéfini, le module de détection est configuré pour détecter, en tant que dégradation de la qualité de l'huile, un niveau de viscosité anormal de l'huile ;
- si la première déviation atteint un deuxième seuil maximum prédéfini, le module de détection est configuré pour détecter, en tant que dégradation de la qualité de l'huile, une pollution au carburant de l'huile ;
- si la deuxième déviation atteint un troisième seuil minimum prédéfini, le module de détection est configuré pour détecter, en tant que dégradation de la qualité de l'huile, une pollution de l'huile aux suies ; et
- si la deuxième déviation atteint un quatrième seuil maximum prédéfini, le module de détection est configuré pour détecter, en tant que dégradation de la qualité de l'huile, un taux de basicité anormal de l'huile.

Selon un mode de réalisation particulier, le système de surveillance est tel que :

- si la première déviation atteint un cinquième seuil maximum prédéfini et si la deuxième déviation atteint un sixième seuil minimum prédéfini, le module de détection est configuré pour détecter en tant que dégradation de la qualité de l'huile une pollution de l'huile au fuel léger ;
- si la première déviation atteint un septième seuil maximum prédéfini et si la deuxième déviation atteint un huitième seuil maximum prédéfini, le module de détection est configuré pour détecter en tant que dégradation de la qualité de l'huile une pollution de l'huile au fuel lourd ; et
- si l'humidité relative atteint un neuvième seuil maximum prédéfini, si la première déviation atteint un dixième seuil maximum prédéfini et si la deuxième déviation atteint un onzième seuil maximum prédéfini, le module de détection est configuré pour détecter, en tant que dégradation de la qualité de l'huile, un taux anormal de l'huile en fer.

L'invention vise également un système moteur comprenant :

- un circuit d'huile comportant un moteur, une pompe pour injecter une huile de lubrification de moteur dans ledit moteur et un carter pour collecter l'huile de lubrification de moteur évacuée en sortie du moteur ; et
- un système de surveillance tel que défini dans le présent document, le connecteur de la canalisation d'entrée étant connecté au circuit d'huile de sorte à prélever de l'huile de lubrification de moteur circulant dans ledit circuit d'huile, et dans lequel la canalisation de sortie est configurée pour évacuer l'huile de lubrification dans le carter.

Selon un mode de réalisation particulier, le circuit d'huile comprend en outre un filtre à huile disposé entre la pompe et le moteur, le connecteur de la canalisation d'entrée étant connecté au circuit d'huile au niveau d'un point de prélèvement situé :

- entre la pompe et le filtre à huile de sorte à être en aval de la pompe et en amont du moteur ; ou
- entre la pompe et le moteur de sorte à être en aval du moteur et en amont de la pompe.

L'invention vise également un procédé de surveillance correspondant mis en oeuvre par un système de surveillance tel que défini dans ce document.

A noter que les différents modes de réalisation mentionnés dans ce document en relation avec le système de surveillance et au système moteur de l'invention ainsi que les avantages associés s'appliquent de façon analogue au procédé de surveillance de l'invention.

Selon un mode de réalisation, l'invention est mise en oeuvre au moyen de composants logiciels et/ou matériels. Dans cette optique, le terme « unité » (que l'on peut appeler aussi « module ») peut correspondre dans ce document aussi bien à un composant logiciel, qu'à un composant matériel ou à un ensemble de composants matériels et logiciels.

Pour chaque étape du procédé de surveillance, le dispositif électronique de l'invention peut comprendre une unité correspondante configurée pour réaliser ladite étape.

Dans un mode particulier de réalisation, les différentes étapes du procédé mises en oeuvre par l'unité d'analyse, par l'unité de détection, par l'unité de contrôle, par l'unité de commande et par l'unité de calibration sont déterminées par des instructions de programmes d'ordinateurs.

En conséquence, l'invention vise aussi un programme d'ordinateur sur un support d'informations (ou support d'enregistrement), ce programme étant susceptible d'être mis en oeuvre dans un système de surveillance ou plus généralement dans un ordinateur, ce programme comportant des instructions adaptées à la mise en oeuvre de certaines étapes d'un procédé de surveillance tel que défini dans ce document.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations (ou support d'enregistrement) lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Brève description des dessins

D'autres caractéristiques et avantages de la présente invention ressortiront de la description faite ci-dessous, en référence aux dessins annexés qui en illustrent des exemples de réalisation dépourvus de tout caractère limitatif. Sur les figures:

[Fig. 1] la figure 1 représente schématiquement la structure d'un système de surveillance et d'un système moteur selon un mode de réalisation particulier de l'invention ;

[Fig. 2] la figure 2 représente schématiquement, sous forme d'un diagramme, les étapes d'un procédé selon un mode de réalisation particulier de l'invention ;

[Fig. 3] la figure 3 représente schématiquement l'évolution de premiers paramètres mesurés par un système de surveillance, selon un mode de réalisation particulier de l'invention ;

[Fig. 4] la figure 4 représente schématiquement l'évolution de paramètres traités par un système de surveillance, selon un mode de réalisation particulier de l'invention ;

[Fig. 5] la figure 5 représente schématiquement l'évolution de paramètres traités par un système de surveillance, selon un mode de réalisation particulier de l'invention ;

[Fig. 6] la figure 6 représente schématiquement l'évolution de paramètres traités par un système de surveillance, selon un mode de réalisation particulier de l'invention ;

[Fig. 7] la figure 7 représente schématiquement, sous forme d'un diagramme, les étapes d'un procédé selon un mode de réalisation particulier de l'invention ;

[Fig. 8] la figure 8 représente schématiquement l'évolution de paramètres traités par un système de surveillance, selon un mode de réalisation particulier de l'invention ;

[Fig. 9] la figure 9 représente schématiquement l'évolution de paramètres traités par un système de surveillance, selon un mode de réalisation particulier de l'invention ;

[Fig. 10] la figure 10 représente schématiquement, sous la forme d'un tableau, des règles mises en oeuvre par un système de surveillance, selon un mode de réalisation particulier de l'invention ;

[Fig. 11] la figure 11 représente schématiquement l'évolution de paramètres traités par un système de surveillance, selon un mode de réalisation particulier de l'invention ;

[Fig. 12] la figure 12 représente schématiquement l'évolution de paramètres traités par un système de surveillance, selon un mode de réalisation particulier de l'invention ;

[Fig. 13] la figure 13 représente schématiquement, sous la forme d'un diagramme, les étapes d'un procédé mis en oeuvre par un système de surveillance, selon un mode de réalisation particulier de l'invention ;

[Fig. 14] la figure 14 représente schématiquement l'évolution de paramètres traités par un système de surveillance, selon un mode de réalisation particulier de l'invention ; et

[Fig. 15] la figure 15 représente schématiquement l'évolution de paramètres traités par un système de surveillance, selon un mode de réalisation particulier de l'invention.

Description des modes de réalisation

Comme indiqué ci-avant, l'invention porte sur la surveillance d'un moteur fonctionnant dans un circuit d'huile.
L'invention se propose de surveiller efficacement un moteur au moyen d'un système de surveillance (appelé aussi système de gestion ou système de contrôle) comprenant une unité de capteur, une unité d'analyse et une unité de détection. L'unité de capteur est raccordée à une canalisation d'entrée qui comprend un connecteur de tuyauterie hydraulique configuré pour se connecter à un circuit d'huile du moteur. L'unité de capteur comprend également au moins un capteur configuré pour mesurer des premiers paramètres représentatifs de la qualité d'une huile de lubrification de moteur prélevée dans le circuit d'huile via la canalisation d'entrée. L'unité d'analyse est configurée pour déterminer, à partir des premiers paramètres, ou de deuxièmes paramètres obtenus par un traitement des premiers paramètres, si au moins une condition prédéfinie est satisfaite. Pour ce faire, l'unité d'analyse peut comparer ces premiers ou deuxièmes paramètres avec au moins une valeur seuil. L'unité de détection permet de détecter au moins une dégradation de la qualité de l'huile représentative d'un état anormal du moteur, si ladite au moins une condition prédéfinie est satisfaite.
En monitorant la qualité de l'huile circulant dans le circuit d'huile d'un moteur alors que celui-ci est en cours de fonctionnement, il est possible de suivre l'état du moteur en continu et ainsi de détecter, identifier et si besoin traiter les éventuels pannes ou états anormaux susceptibles d'affecter le moteur.
L'invention porte également sur un procédé de surveillance (ou procédé de gestion, ou encore procédé de contrôle) correspondant, sur un programme d'ordinateur correspondant et sur un support d'information comprenant un tel programme.
D'autres aspects et avantages de la présente invention ressortiront des exemples de réalisation décrits ci-dessous en référence aux dessins mentionnés ci-avant.
Dans ce document, des exemples de mise en oeuvre de l'invention sont décrits dans le contexte d'un moteur à combustion interne, de type moteur diésel ou moteur essence ou moteur à gaz par exemple. Comme le comprend l'homme du métier, l'invention ne se limite toutefois pas à ces cas particuliers et s'applique plus généralement à la surveillance et au contrôle de tous moteurs mécaniques, en particulier de type moteur à combustion interne (ou moteur thermique) et moteur électrique. L'invention peut s'appliquer par exemple à la surveillance et au contrôle d'un moteur diesel ou moteur à gaz.
Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

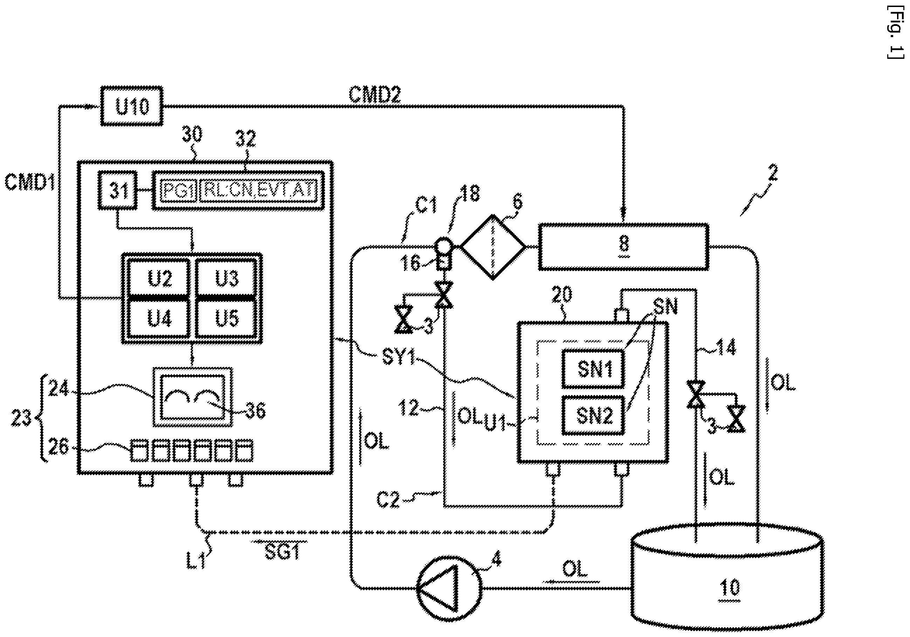

La **figure 1** représente de manière schématique la structure d'un système de surveillance SY1 et d'un circuit huile C1, conforme à un mode de réalisation particulier. Le système de surveillance SY1 et le circuit d'huile C1 sont configurés pour coopérer ensemble, formant ainsi un système 2.
Plus spécifiquement, le circuit d'huile C1, dit circuit d'huile principal, comprend un moteur mécanique 8 (appelé par la suite « moteur »), une pompe 4 pour injecter une huile de lubrification de moteur OL (appelée par la suite « huile ») dans le moteur 8, et un carter 10 pour collecter l'huile de lubrification de moteur OL évacuée en sortie du moteur 8. Le circuit d'huile C1 comprend en outre un filtre à huile 6 disposé en amont du moteur 8 pour filtrer diverses pollutions, boues, suies ou autres susceptibles d'être présentes dans l'huile OL avant que cette dernière entre dans le moteur 8. Dans cet exemple, le filtre 6 est positionné entre la pompe 4 et le moteur 8.
On suppose dans cet exemple que le moteur 8 est un moteur à combustion interne, par exemple de type moteur diesel ou moteur à gaz, d'autres exemples de moteurs mécaniques étant toutefois possibles.
La pompe 4 est configurée pour faire circuler l'huile OL à haute pression (ici à une pression comprise entre 0 et 10 bars, avec un débit entre 0 et 800 m$^3$/h, par exemple 7 bars à 54 m$^3$/h. On comprend toutefois que la configuration de fonctionnement du circuit d'huile principal C1, notamment en pression et débit, peut être adaptée au cas par cas.
Par ailleurs, l'huile de lubrification OL est une huile résistante aux pollutions d'un moteur à combustion tel que le moteur 8 dans le cas présent.
Le système général 2 comprend en outre un circuit d'huile secondaire C2 formant une dérivation raccordée au circuit d'huile principal C1 au niveau d'un point de prélèvement 18. Plus précisément, le circuit d'huile secondaire C2 est un circuit d'analyse comprenant dans cet exemple une canalisation d'entrée 12, une unité de capteur (ou unité de mesure) U1 et une canalisation de sortie 14.

L'objet du système de surveillance SY1 est de surveiller l'état du moteur 8 alors que celui-ci est en cours de fonctionnement, de détecter et identifier des états anormaux (pannes, avaries, disfonctionnements, etc.) susceptibles d'affecter le moteur 8, et de sécuriser éventuellement le moteur pour s'assurer qu'il reste dans des conditions opérationnelles.

Le système de surveillance (appelé aussi système) SY1 comprend une unité de capteur U1 (déjà mentionnée ci-avant), une unité d'analyse U2, une unité de détection U3, et éventuellement une unité de contrôle U4 et/ou une unité de calibration U5. D'autres modes de réalisation sont toutefois possibles, notamment sans l'unité de contrôle U4 et/ou sans l'unité de calibration U5.

Dans cet exemple, l'unité de capteur U1 est logée dans un premier boîtier (ou premier dispositif) 20 tandis que les unités U2, U3, U4 et U5 sont logées dans un deuxième boîtier (ou deuxième dispositif) 30 distant du premier boîtier 20. L'unité de calibration U5 peut éventuellement être située hors des boîtiers 20 et 30. Ces deux boîtiers 20 et 30 sont reliés par une liaison de communication L1 permettant en particulier à l'unité de capteur U1 de transmettre des signaux de capteur SG1 à l'unité d'analyse U2, comme expliqué ci-après. D'autres mises en oeuvre sont toutefois possibles dans lesquelles les unités U1-U5 sont par exemple arrangées ensemble dans un même boîtier ou sont arrangées de façon différente dans plusieurs boîtiers ou dispositifs.

L'unité de capteur U1 est raccordée à la canalisation d'entrée 12 et à la canalisation de sortie 14. La canalisation d'entrée 12 comprend un connecteur de tuyauterie hydraulique 16 (appelé aussi raccordement) configuré pour se connecter au circuit d'huile C1 du moteur 8. Le connecteur 12 présente des caractéristiques mécaniques pour se fixer au circuit d'huile principal C1 au niveau du prélèvement 18 et pour résister aux conditions de température et de pression imposées par le circuit d'huile principal C1. Il peut s'agir d'un connecteur pour tuyauterie hydraulique flexible ou pour tuyauterie hydraulique rigide, selon le cas. Le connecteur 16 peut être en acier ou dans un matériau acier inoxydable pour résister à la corrosion (dans les environnements marins notamment). Le connecteur 16 est par exemple un raccord étanche de type 15L ou autre. Comme représenté en **figure 1,** un système de vanne d'isolement 3 peut éventuellement être couplé au connecteur 16 ou à la canalisation d'entrée 12 pour permettre si besoin l'isolement et la purge du système en cas d'intervention.

Dans cet exemple, le point de prélèvement 18 au niveau duquel le connecteur 16 se raccorde au circuit d'huile principal C1 se situe entre le filtre à huile 6 et la pompe 4, d'autres positionnements étant toutefois possibles.

L'unité de capteur U1 comprend au moins un capteur SN configuré pour mesurer des premiers paramètres PR1 représentatifs de la qualité d'une huile de lubrification OL prélevée dans le circuit d'huile principal C1 via la canalisation d'entrée 12, plus précisément au niveau du point de prélèvement 18 dans cet exemple. On suppose dans cet exemple que l'unité de capteur U1 comprend 2 capteurs SN1, SN2 configurés pour mesurer des premiers paramètres PR1, le nombre et la nature des capteurs pouvant varier selon le cas.

De manière générale, les capteurs SN1 et SN2 sont disposés en dérivation dans le circuit d'huile secondaire C2 pour mesurer les premiers paramètres PR1 sur l'huile OL prélevée dans le circuit principal C1 au niveau du point de prélèvement 18, alors que le moteur 8 est en cours de fonctionnement, ou tout du moins alors que l'huile OL circule dans le circuit d'huile principal C1.

Le positionnement en dérivation de l'unité de capteur U1 est avantageux en ce qu'il permet de ne prélever qu'une partie du flux d'huile OL circulant dans le circuit d'huile principal C1 et ainsi de maintenir un débit d'huile plus bas dans le circuit d'huile secondaire C2 que dans le circuit d'huile principal C1. En réglant notamment le connecteur 16 en conséquence, on peut ajuster le débit d'huile afin de permettre une mesure plus efficace de la qualité de l'huile OL. Dans l'exemple considéré ici, le débit d'huile est par exemple de 600 $m^3$/heure maximum dans le circuit d'huile principal C1 et de 0,6m$^3$/heure maximum dans le circuit d'huile secondaire C2. En outre, la configuration en dérivation permet d'isoler le circuit d'huile secondaire C2 si besoin et d'intervenir (installation, maintenance, etc.) si besoin sur le système de surveillance SY1 sans perturber le fonctionnement du circuit d'huile principal C1.

Les capteurs SN (appelés aussi « oil condition sensor » en anglais) permettent d'évaluer régulièrement, voire en continu, la qualité de l'huile de moteur OL circulant dans le circuit d'huile principal C1 lorsque le moteur 8 est en fonctionnent et/ou sous pression d'huile.

Les capteurs SN peuvent être de divers types selon la nature des premiers paramètres que l'on souhaite mesurer. En mesurant des premiers paramètres PR1 représentatifs de la qualité de l'huile de lubrification OL prélevée dans le circuit d'huile principal C1, on peut avantageusement surveiller l'état du moteur 8 et détecter des états anormaux susceptibles d'affecter le moteur.

Dans cet exemple, les capteurs SN1 et SN2 sont configurés pour mesurer au moins les premiers paramètres PR1 suivants de l'huile OL :

- la température T de l'huile ;

- la pression P de l'huile ;

- l'humidité relative HR de l'huile ;

- la conductivité électrique CE de l'huile ; et

- la constante diélectrique CD de l'huile.

De façon bien connue, la conductivité électrique (mesurée en siemens par mètre, noté S/m) caractérise ici l'aptitude de l'huile OL à laisser des charges électriques se déplacer librement et donc à permettre le passage d'un courant électrique.

D'autres configurations sont possibles selon lesquelles seules une sous-combinaison de certains parmi ces paramètres sont mesurées par l'unité de capteur U1.

Selon un mode de réalisation particulier, les premiers paramètres PR1 mesurés par les capteurs SN comprennent en outre au moins un paramètre PT caractérisant des particules métalliques susceptibles d'être présentes dans l'huile OL. Il peut s'agir de particules ferreuses et/ou non ferreuses. Dans ce cas, les capteurs SN mesurent en tant que paramètre PT au moins l'un parmi : la quantité de particules métalliques présentes dans l'huile OL, la taille des particules métalliques présentes dans l'huile OL et le poids des particules métallique présentes dans l'huile OL. D'autres mises en oeuvre sont toutefois possibles dans lesquelles les particules métalliques susceptibles d'être présentes dans l'huile ne sont pas prises en compte dans le procédé de surveillance de l'invention.

Ces paramètres T, P, HR, CE, CD, et éventuellement PT, ont été sélectionnés dans le présent mode de réalisation en raison de leur capacité inhérente à caractériser le fonctionnement d'un moteur de sorte à pouvoir détecter et identifier un large spectre d'états anormaux (pannes, avaries, disfonctionnements, etc.) susceptibles d'affecter ce moteur.

Par ailleurs, la canalisation de sortie 14 raccordée à l'unité de capteur U1 est configurée pour évacuer l'huile OL depuis l'unité de capteur U1 dans le circuit d'huile principal C1. Dans cet exemple, l'huile OL prélevée depuis le point de prélèvement 18 et mesurée par les capteurs SN est évacuée dans le carter 10 afin de retourner dans le circuit d'huile principal C1. La manière dont la canalisation de sortie 14 est configurée peut varier selon le cas.

L'huile de lubrification OL peut donc circuler en circuit fermé dans le système moteur 2 comprenant le circuit principal C1 et le circuit secondaire C2.

Comme déjà indiqué, le système de surveillance SY1 comprend les unités U2, U3, U4 et U5 qui sont dans cet exemple logé dans un boîtier 30 distinct du boîtier 20. Il est ainsi possible de placer l'unité de capteur U1 au plus près du circuit d'huile principal C1 et de disposer les autres composants du système de surveillance SY1 à distance afin qu'ils ne soient pas exposés aux conditions de fonctionnement du circuit d'huile principal C1 et pour faciliter les interventions humaines (installation, utilisations, réglages, maintenance, etc.).

Plus particulièrement dans cet exemple, le boîtier 30 comprend un processeur 31, une mémoire non volatile 32, les unités U2-U5 et une interface utilisateur 23. Le processeur 31 piloté par le programme d'ordinateur PG1 est ici configuré pour mettre en oeuvre les unités U2, U3, U4 et U5, comme représenté en **figure 1.**

Le boitier 30 comprenant notamment le processeur 31 et la mémoire 32 prend par exemple la forme d'un ordinateur ou d'un dispositif électronique équivalent.

L'unité d'analyse U2 est configurée pour déterminer, à partir des premiers paramètres PR1 ou à partir de deuxièmes paramètres PR2 obtenus par un traitement des premiers paramètres PR1, si au moins une condition prédéfinie CN est satisfaite. Dans cet exemple, les premiers paramètres PR1 sont reçus ici sous la forme de signaux SG1 transmis par l'unité de capteur U1 via la liaison de communication L1. Lors de son analyse, l'unité d'analyse U2 compare les premiers ou deuxièmes paramètres PR1, PR2 avec au moins une valeur seuil prédéfinie SL conformément à au moins une règle RL (comme expliqué ultérieurement).

La mémoire 32 est une mémoire non volatile réinscriptible (Flash, EEPRO, etc.) ou une mémoire morte (ROM), cette mémoire constituant un support d'enregistrement (ou support d'informations) conforme à un mode de réalisation particulier, lisible par le système de surveillance SY1, et sur lequel est enregistré un programme d'ordinateur PG1 conforme à un mode de réalisation particulier. Ce programme d'ordinateur PG1 comporte des instructions pour l'exécution de certaines étapes d'un procédé de surveillance selon un mode de réalisation particulier. Les étapes de ce procédé sont décrites ultérieurement dans des modes de réalisation particuliers.

Comme représenté en **figure 1,** la mémoire 32 est apte à stocker au moins une règle RL spécifiant au moins un évènement EVT associé à au moins une condition CN. Dans ce mode de réalisation, chaque évènement EVT correspond à une dégradation particulière de la qualité de l'huile OL détectable par le système de surveillance SY1 de l'invention. Comme expliqué par la suite, la qualité de l'huile de lubrification OL est susceptible d'être dégradée ou altérée de diverses manières, selon le type de disfonctionnement que rencontre le moteur 8.

On suppose dans cet exemple que la mémoire 32 comprend une pluralité de règles RL spécifiant chacune au moins une condition RL à remplir pour qu'un évènement EVT associé soit détecté. Chaque règle RL peut en outre spécifier au moins une action de sécurisation AT déclenchée par l'unité de contrôle U4 en réponse à la détection de l'évènement associé EVT.

Un évènement EVT au sens de l'invention constitue un quelconque état anormal de l'huile de lubrification OL détecté par le système de surveillance SY1, cet état anormal de l'huile étant lui-même représentatif (ou symptomatique) d'un état anormal du moteur 8. Autrement dit, un évènement EVT est une dégradation de la qualité de l'huile OL qui se caractérise par une évolution particulière de l'un ou plusieurs parmi les paramètres PR1, et éventuellement PR2, et qui est donc détectable par le système de surveillance SY1 à partir de ces paramètres. Un évènement EVT peut ainsi être (ou comprendre) une ou des pollutions prédéfinies affectant l'huile OL (par exemple une pollution en eau, en carburant et/ou en particules métalliques), un état anormal de sa viscosité, et plus généralement un quelconque état anormal de l'huile détectable à partir des premiers ou deuxièmes paramètres PR1, PR2. Ces évènements EVT sont définis au préalable par l'homme du métier au cas par cas, en fonction notamment des caractéristiques du moteur et du circuit d'huile et des conditions opérationnelles.

Chaque évènement EVT, c'est-à-dire chaque type de dégradation de la qualité de l'huile OL, reflète ainsi un état anormal du moteur 8 qui nécessite une attention particulière. Un évènement EVT peut être représentatif d'une avarie ou panne du moteur 8, d'une déviation ou dégradation vis-à-vis d'un état de référence du moteur, ou d'un quelconque autre disfonctionnement. Chaque état anormal du moteur 8 se manifeste par une dégradation ou état prédéfini (pollution, dégradation, etc.) de l'huile de lubrification OL que le système de surveillance SY1 est apte à détecter.

La mémoire 32 peut en outre être configurée pour stocker les premiers paramètres PR1, et éventuellement aussi les deuxièmes paramètres PR2, obtenus au fil du temps pendant une durée prédéfinie (par exemple pendant 1 an) afin qu'un utilisateur puisse y accéder ultérieurement. En association avec ces premiers et deuxièmes paramètres, la mémoire 32 peut également stocker pendant cette durée prédéfinie chaque évènement EVT détecté pendant cette période ainsi que les éventuelles actions AT déclenchées en réponse à ces évènements. L'accès à ces données peut être utile notamment à des fins de diagnostic, surveillance, statistiques de fonctionnement, maintenance ou autre.

L'unité de contrôle U4 est ainsi configurée, sur détection d'au moins un évènement prédéfini EVT, pour déclencher au moins une action prédéfinie AT conformément aux règles RL, de sorte à sécuriser le moteur 8. L'unité de contrôle U4 peut en particulier réaliser au moins l'une quelconque parmi les actions AT suivantes :

- transmission ou présentation d'une notification d'alarme représentative d'au moins un évènement EVT détecté par le système de surveillance SY1 conformément aux règles RL ; et

- déclenchement d'un envoi, par l'unité de commande U5, d'une commande CMD1 pour modifier au moins un paramètre de fonctionnement du moteur 8.

Comme expliqué par la suite, divers types de commandes sont possibles. L'unité de contrôle U4 peut par exemple être configurée pour envoyer une commande CMD1 pour commander au moteur 8 de se mettre dans un état particulier (par exemple pour déclencher l'arrêt du moteur 8 ou pour modifier son régime de fonctionnement ou tous paramètres de fonctionnement).

Dans l'exemple représenté en **figure 1,** l'unité de contrôle U4 est configurée pour coopérer avec l'unité de commande U5 pour contrôler l'état du moteur 8. L'unité de commande U10 est par exemple configurée, en réponse à une commande CMD1 reçue en provenance de l'unité de contrôle U4, pour commander au moteur 8 de se mettre dans un état particulier en lui envoyant une commande CMD2 appropriée.

Par ailleurs, comme représenté dans cet exemple en **figure 1,** l'interface utilisateur (ou interface homme-machine) 23 du boîtier 30 comprend un écran d'affichage 24 et des boutons ou autre actionneurs notés 26. Le nombre, la nature et la configuration de ces composants de l'interface utilisateur 23 peuvent varier selon le cas. D'autres moyens (sonores, visuels, etc.) peuvent être utilisés en alternative, ou en supplément, pour interagir avec l'utilisateur. L'interface utilisateur 23 permet à un utilisateur notamment d'obtenir des informations fournies par le système de surveillance SY1 et, le cas échéant, d'agir par exemple pour sécuriser le moteur 8 en cas d'état anormal.

L'écran d'affichage 24 permet ici d'afficher des notifications NF destinées notamment à informer l'utilisateur des évènements EVT détectés. On entend ici le terme « notification » au sens large pour désigner un quelconque message ou information pouvant être affiché sur l'écran 24 (ou autrement transmis à l'utilisateur). L'écran peut ainsi présenter des messages d'avertissement NF ou messages d'alerte (alarmes) NF, ainsi que toutes informations utiles pour l'utilisateur telles que notamment des préconisations fournies à l'utilisateur pour traiter au mieux l'évènement EVT détecté. Dans l'exemple représenté en **figure 1,** l'écran d'affichage 24 est configuré pour afficher au moins une jauge 36 (2 jauges dans cet exemple) pour représenter en temps réel au moins l'un des premiers ou deuxièmes paramètres PR1, PR2, ou tous autres paramètres obtenues à partir de ceux-ci.

En cas d'un évènement EVT détecté, tel qu'une avarie du moteur ou un quelconque autre disfonctionnement, l'utilisateur peut notamment agir à l'aide des boutons (ou actionneurs) 26 afin si besoin de forcer l'envoi d'au moins une commande CMD1 par l'unité de contrôle U4.

Par ailleurs, comme expliqué par la suite, une calibration peut être nécessaire pour réaliser une configuration initiale du système de surveillance SY1 et plus particulièrement de l'unité d'analyse U2. L'unité de calibration U5 est configurée pour réaliser une calibration lorsqu'une telle calibration est nécessaire, comme décrit ultérieurement.

La configuration et le fonctionnement des unités U1-U5 et U10 apparaîtront plus précisément dans les exemples de réalisation qui suivent. On comprend que ces unités telles que représentées en **figure 1** ne constituent qu'un exemple de mise en oeuvre non limitatif de l'invention. Certains éléments généralement présents notamment dans un circuit d'huile ou dans un système moteur ont été volontairement omis car ils ne sont pas nécessaires à la compréhension de la présente invention. En outre, certains éléments du système moteur 2 ne sont décrits ici que pour faciliter la compréhension de l'invention, ces éléments n'étant pas nécessaires pour mettre en oeuvre l'invention, comme le comprend l'homme du métier.

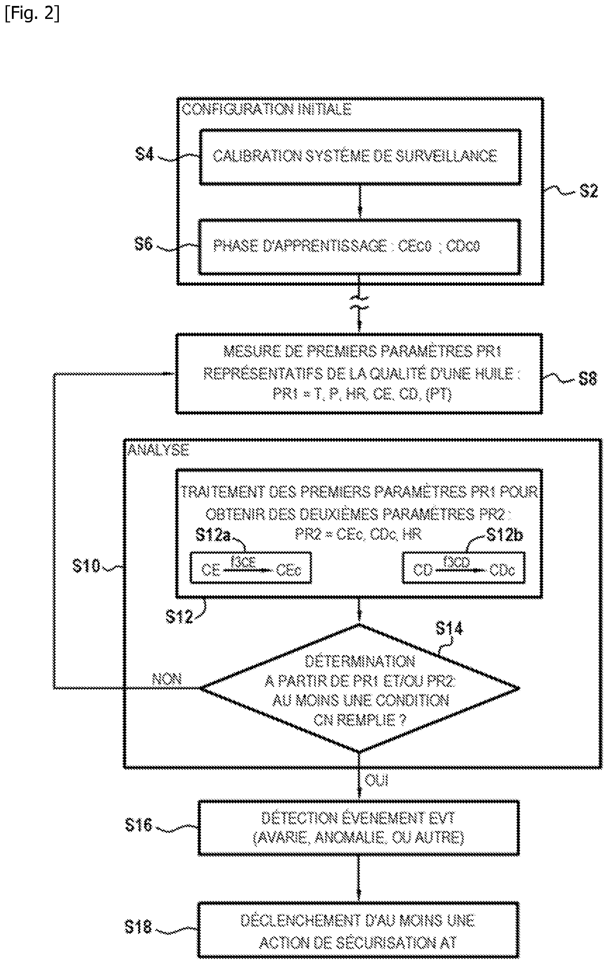

Un mode de réalisation particulier est à présent décrit en référence aux **figures 2-6.** On suppose ainsi que le moteur 8 est en fonctionnement et/ou sous pression d'huile et que le système de surveillance SY1 décrit précédemment en référence à la **figure 1** met en oeuvre un procédé de surveillance (appelé aussi procédé de gestion ou procédé de contrôle). Pour ce faire, l'unité de capteur U1 mesure des premiers paramètres PR1 et le processeur 31 exécute le programme d'ordinateur PG1 pour mettre en oeuvre les unités U2-U5.

Plus spécifiquement, au cours d'une étape S2 préliminaire **(figure 2),** le système de surveillance SY1, et notamment l'unité d'analyse U2, peut faire l'objet d'une configuration initiale. On suppose dans un premier temps que le système de surveillance SY1 est déjà opérationnel de sorte qu'aucune configuration initiale S2 n'est nécessaire.

Au cours d'une étape S8, l'unité de mesure U1 mesure des premiers paramètres PR1 représentatifs de la qualité d'une huile de lubrification de moteur OL prélevée dans le circuit d'huile principal C1 via la canalisation d'entrée 12, au niveau du point de prélèvement 18. A cet effet, la canalisation d'entrée 12 prélève une portion du flux d'huile OL circulant dans le circuit d'huile principal C1 de sorte à le conduire depuis le connecteur 16 jusqu'à l'unité de capteur U1 située dans le boîtier 20. Les capteurs SN mesurent ainsi les premiers les premiers paramètres PR1 alors que l'huile prélevée circule dans le circuit d'huile secondaire C2.

On considère dans cet exemple que les premiers paramètres PR1 mesurés par les capteurs SN comprennent :

- la température T de l'huile ;

- la pression P de l'huile ;

- l'humidité relative HR de l'huile ;

- la conductivité électrique CE de l'huile ; et

- la constante diélectrique CD de l'huile.

Les capteurs SN peuvent ainsi mesurer régulièrement, voire en continu, les premiers paramètres PR1 à partir de l'huile OL prélevée depuis le circuit d'huile principal C1. Comme déjà indiqué, les premiers paramètres PR1 mesurés par les capteurs SN peuvent aussi comprendre au moins un paramètre PT caractérisant des particules métalliques susceptibles d'être présentes dans l'huile OL. Il peut s'agir de particules ferreuses et/ou non ferreuses. Dans ce cas, les capteurs SN mesurent en tant que paramètre PT au moins l'un parmi : la quantité de particules métalliques présentes dans l'huile OL, la taille de particules métalliques présentes dans l'huile OL et le poids de particules métallique présentes dans l'huile OL. La caractérisation des particules métalliques dans l'huile OL permet d'évaluer de façon plus complète et précise l'état du moteur 8. La prise en compte de ces particules n'est toutefois pas obligatoire pour mettre en oeuvre l'invention.

L'unité de capteur U1 génère ainsi des signaux SG1 comprenant les premiers paramètres PR1 mesurés (S8) par les capteurs SN. Ces signaux SG1 sont transmis via la liaison de communication L1 au dispositif 30.

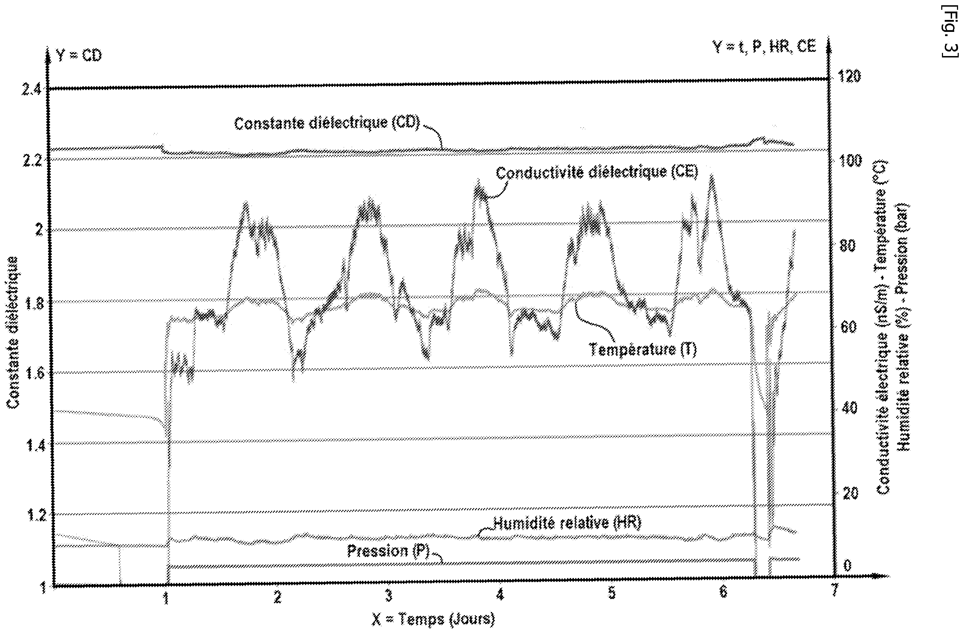

La **figure 3** est un graphique représentant à titre d'exemple l'évolution des premiers paramètres PR1 suivants au cours du temps : température T, pression P, humidité relative HR, conductivité électrique CE et constante diélectrique CD mesurées au par les capteurs SN.

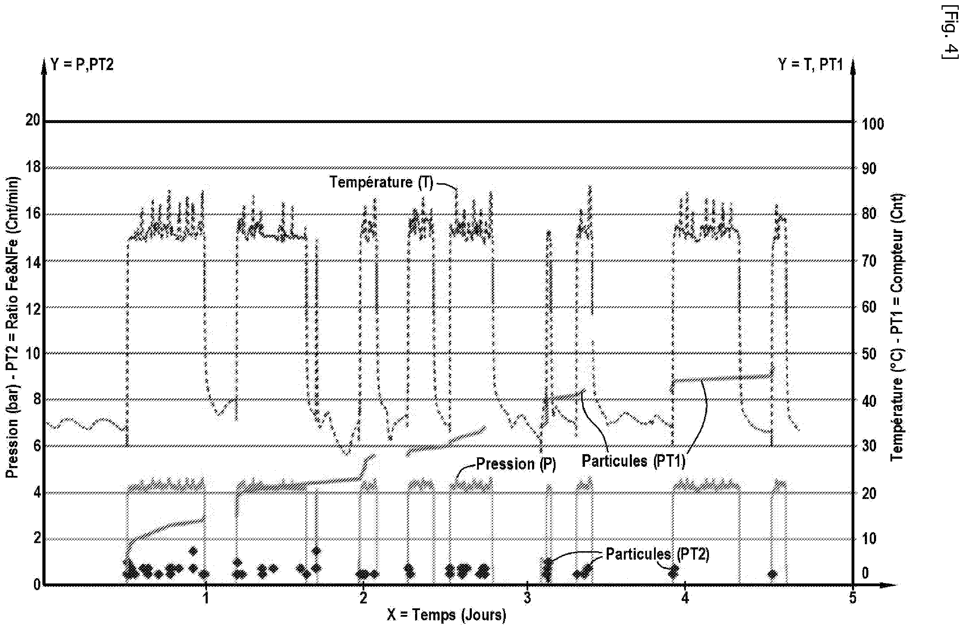

La **figure 4** est un graphique représentant à titre d'exemple l'évolution, en tant que premiers paramètres PR1, de la température T, de la pression P, et de deux paramètres PT1 et PT2 caractérisant des particules métalliques présentes dans l'huile OL. Dans cet exemple, ces paramètres PT1 et PT2 caractérisent de deux manières différentes la quantité de particules métalliques (particules ferreuses Fe et particules non ferreuses NFe) présentes dans l'huile OL (PT1 : comptage cumulé des particules métalliques ; PT2 : comptage ponctuel par minute des particules métalliques).

Au cours d'une étape d'analyse S10 **(figure 2),** l'unité d'analyse U2 réalise une analyse à partir des premiers paramètres PR1 reçus depuis l'unité de capteur U1 pour déterminer si au moins une condition prédéfinie CN telle que définie dans les règles RL est satisfaite. Plus particulièrement, lors de cette analyse S10, l'unité d'analyse U2 détermine, à partir des premiers paramètres PR1 ou de deuxièmes paramètres PR2 obtenus par un traitement S12 des premiers paramètres PR1, si au moins une condition prédéfinie CN est satisfaite, en comparant lesdits premiers ou deuxièmes paramètres avec au moins une valeur seuil SL.

Selon un premier exemple, aucun traitement S12 n'est réalisé à ce stade, l'unité d'analyse U2 déterminant (S14, **figure 2)** alors si au moins une condition prédéfinie CN est satisfaite à partir des premiers paramètres PR1. L'unité d'analyse U2 peut ainsi comparer chacun des premiers paramètres PR1 (ou une partie seulement de ceux-ci) avec des seuils respectifs SL définis dans les règles RL. Pour être satisfaite, une condition CN requiert par exemple qu'un premier paramètre PR1 respectif atteigne un seuil (minimum ou maximum) prédéfini SL.

On considère dans le cas présent un deuxième exemple selon lequel un traitement S12 **(figure 2)** est réalisé par l'unité d'analyse U2 lors de l'analyse S10 pour déterminer des deuxièmes paramètres PR2 à partir des premières paramètres PR1 mesurés en S8, puis pour déterminer à partir de ces deuxièmes paramètres PR2 si au moins une condition prédéfinie CN est remplie.

Plus précisément, au cours de ce traitement S12, l'unité d'analyse U2 réalise un traitement S12 sur la conductivité électrique CE et sur la constante diélectrique CD de l'huile reçues depuis l'unité de capteur U1. Ce traitement vise à obtenir une conductivité électrique corrigée CEc et une constante diélectrique CDc corrigée à partir respectivement de la conductivité électrique CE et de la constante diélectrique CD mesurées en S8.

En effet, comme l'illustre la **figure 3,** il a été constaté que la conductivité électrique CE et la constante diélectrique CD de l'huile varient de façon significative en fonction des conditions climatiques, et plus précisément en fonction de la température T, de la pression P et de l'humidité relative HR de l'huile OL circulant dans le circuit d'huile principal C1. Il a entre autre été observé que la conductivité électrique CE augmente sensiblement lorsque la température T croît. Les changements climatiques et/ou autres affectant le moteur 8 et plus généralement le circuit d'huile principal C1 peuvent donc rendre les mesures de la conductivité électrique CE et la constante diélectrique CD de l'huile instables ou plus difficiles à analyser pour évaluer l'état opérationnel du moteur 8 à iso conditions.

Dans le mode de réalisation envisagé ici, l'unité d'analyse U2 réalise ainsi, lors du traitement S12, les deux opérations S12a et S12b décrites ci-après. Ces deux opérations S12a et S12b peuvent être réalisées simultanément ou l'une après l'autre selon un ordre quelconque. Dans un exemple particulier, seule l'une parmi ces deux opérations S12a et S12b est réalisée, de sorte que seule l'une parmi la conductivité électrique corrigée CEc et la constante diélectrique corrigée CDc est déterminée et prise en compte en tant que deuxième paramètre PR2 dans la suite du procédé de l'invention pour détecter au moins un évènement EVT.

Plus spécifiquement, l'unité d'analyse U11 détermine (S12a), en tant que deuxième paramètre PR2, une conductivité électrique corrigée CEc à partir de la conductivité électrique CE mesurée en S8 en appliquant une première fonction polynomiale f3CE, dite première fonction polynomiale finale. Cette première fonction polynomiale finale f3CE définit la conductivité électrique corrigée CEc à partir de la conductivité électrique CE, la température T, la pression P et l'humidité relative HR mesurées par les capteurs SN en S8.

La fonction polynomiale f3CE est à un ordre n. Dans le présent exemple, n=6 (bien que d'autres ordres soient possibles, n étant un nombre entier pair) et la fonction polynomiale f3CE s'énonce comme suit :

$$CEc = [(a6 \cdot T^6 + a5 \cdot T^5 + a4 \cdot T^4 + a3 \cdot T^3 + a2 \cdot T^2 + a1 \cdot T + a0) + (b6 \cdot P^6 + b5 \cdot P^5 + b4 \cdot P^4 + b3 \cdot P^3 + b2 \cdot P^2 + b1 \cdot P + b0) + (c6 \cdot HR^6 + c5 \cdot HR^5 + c4 \cdot HR^4 + c3 \cdot HR^3 + c2 \cdot HR^2 + c1 \cdot HR + c0)] \cdot CE$$

dans laquelle CEc est la conductivité électrique corrigée et CE est la conductivité électrique mesurée appelée aussi conductivité électrique brute.

Comme indiqué ci-avant, la première fonction polynomiale finale f3CE est pondérée par des premiers coefficients a0-a6, b0-b6 et c0-c6 (notés collectivement CFCE) associés respectivement à la température T, la pression P et l'humidité relative HR, ces coefficients étant définis de sorte à compenser au moins en partie l'influence respective de la température T, de la pression P et de l'humidité relative HR sur la conductivité électrique CE mesurée en S8 par l'unité de capteur U1.

On note par la suite de la façon suivante les coefficients CFCE :

- CFCE-T : les coefficients a0-a-6 ;
- CFCE-P : les coefficients b0-b6 ;
- CFCE-HR : les coefficients c0-c6 ;

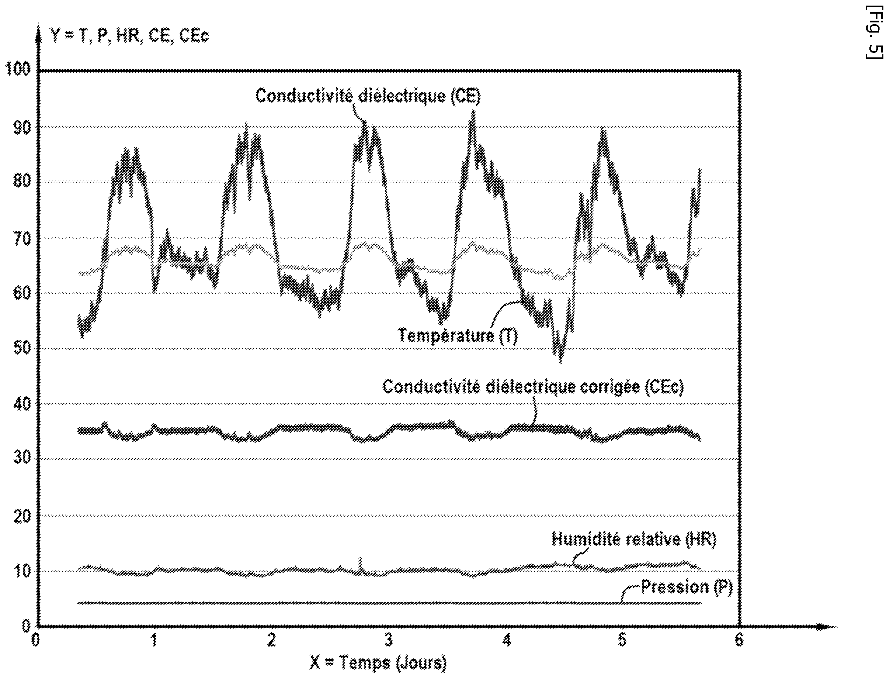

La **figure 5** représente à titre d'exemple l'évolution de la conductivité électrique corrigée CEc en fonction du temps, obtenue à partir du traitement S12a dans un cas particulier.

De façon analogue, l'unité d'analyse U11 détermine (S12b), en tant que deuxième paramètre PR2, une constante diélectrique corrigée CDc à partir de la constante diélectrique CD mesurée en S8 en appliquant une deuxième fonction polynomiale f3CD, dite deuxième fonction polynomiale finale. Cette deuxième fonction polynomiale finale f3CD définit la constante diélectrique corrigée CDc à partir de la constante diélectrique CD, la température T, la pression P et l'humidité relative HR mesurées par les capteurs SN en S8.

La fonction polynomiale f3CD est à un ordre p. Dans le présent exemple, p=n=6 (bien que d'autres ordres soient possibles, p étant un nombre entier pair) et la fonction polynomiale f3CD se s'énonce comme suit :

$$CDc = [(d6 \cdot T^6 + d5 \cdot T^5 + d4 \cdot T^4 + d3 \cdot T^3 + d2 \cdot T^2 + d1 \cdot T + d0) + (e6 \cdot P^6 + e5 \cdot P^5 + e4 \cdot P^4 + e3 \cdot P^3 + e2 \cdot P^2 + e1 \cdot P + e0) + (f6 \cdot HR^6 + f5 \cdot HR^5 + f4 \cdot HR^4 + f3 \cdot HR^3 + f2 \cdot HR^2 + f1 \cdot HR + f0)] \cdot CD$$

dans laquelle CDc est la constante diélectrique corrigée et CD est la constante diélectrique mesurée appelée aussi constante diélectrique brute.

Comme indiqué ci-avant, la deuxième fonction polynomiale finale f3CD est pondérée par des premiers coefficients d0-d6, e0-e6 et f0-f6 (notés collectivement CFCD) associés respectivement à la température T, la pression P et l'humidité relative HR, ces coefficients étant définis de sorte à compenser au moins en partie l'influence respective de la température T, de la pression P et de l'humidité relative HR sur la constante diélectrique CE mesurée en S8 par l'unité de capteur U1.

On note par la suite de la façon suivante les coefficients CFCD :

- CFCD-T : les coefficients d0-d6 ;

- CFCD-P : les coefficients e0-e6 ; et

- CFCD-HR : les coefficients f0-f6.

La valeur des coefficients CFCE et CFCD dans les fonctions polynomiales f3CE et f3CD peut être adaptée selon le cas de sorte à compenser à un niveau approprié l'influence des variations de chacun des paramètres T, P et HR sur respectivement CE et CD. Une manière de déterminer ces coefficients CFCE et CFCD est décrite ultérieurement dans un exemple particulier. Comme expliqué ultérieurement, les coefficients CFCE et CFCD peuvent notamment être choisis de sorte que la correction respective appliquée sur CE et CD soit nulle pour une température de référence Tref, une pression de référence Pref et une humidité relative de référence HRref.

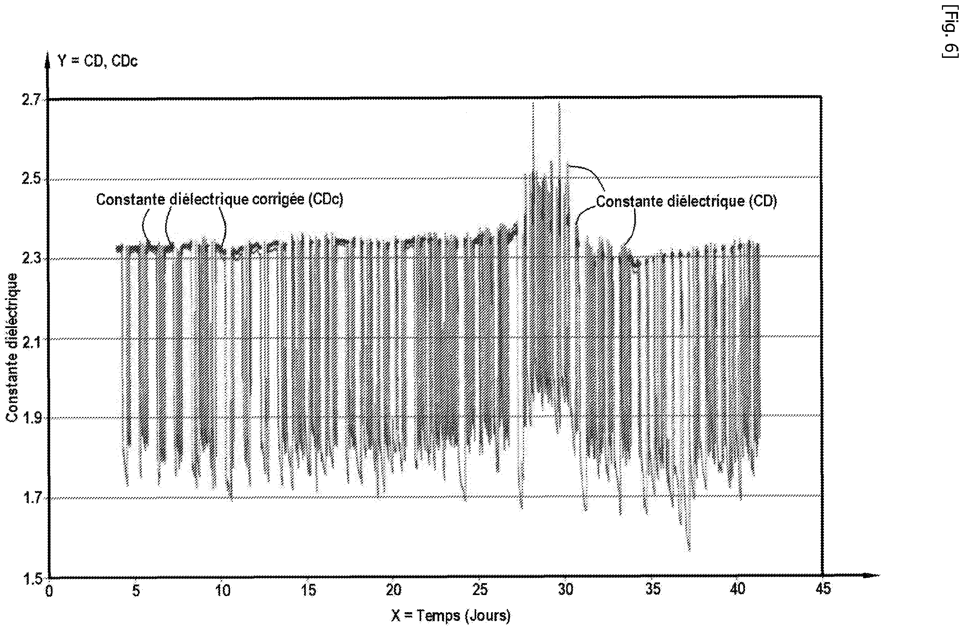

La **figure 6** représente à titre d'exemple l'évolution de la constante diélectrique corrigée CDc en fonction du temps, obtenue à partir du traitement S12b dans un cas particulier.

Dans le cas présent, on considère que les deuxièmes paramètres PR2 déterminés lors du traitement S12 et pris en compte par le système de surveillance SY1 sont : la conductivité électrique corrigée CEc et la constante diélectrique corrigée CDc obtenues en S12 ainsi que l'humidité relative HR mesurée en S8. D'autres exemples sont toutefois possibles dans lesquels d'autres traitements S10 sont réalisés et dans lesquels d'autres paramètres sont utilisés en tant que deuxièmes paramètres PR2 de l'invention. Comme indiqué par la suite, au moins un paramètre PT caractérisant des particules métalliques susceptibles d'être présentes dans l'huile OL peut aussi être pris en compte en tant que deuxième paramètre PR2 dans des variantes de réalisation.

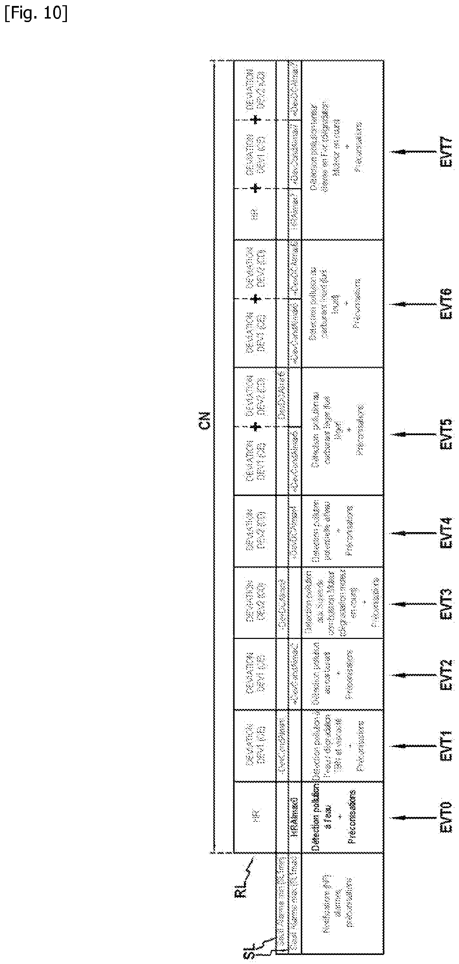

Toujours au cours de l'analyse S10, l'unité d'analyse U2 détermine (S14, **figure 2)** en outre si au moins une condition CN telle que définie par les règles RL est remplie. Comme déjà indiqué, chaque règle RL stockée dans la mémoire 32 définit une ou des règles CN associées à un évènement respectif EVT et éventuellement à au moins une action de sécurisation AT correspondante. Chaque évènement EVT correspond à une dégradation ou état anormal de la qualité de l'huile OL pouvant se produire en réponse à un disfonctionnement particulier du moteur 8. Des exemples de règles RL sont décrits ultérieurement en référence à la **figure 10.**

Dans le mode de réalisation considéré ici, chaque condition CN définit un seuil SL (minimum ou maximum) qu'un premier paramètre PR1 ou deuxième paramètre PR2 doit atteindre pour que la condition CN soit remplie. Lors de l'étape de détermination S14, l'unité d'analyse U2 compare ainsi les deuxièmes paramètres PR2 obtenus en S12 (CEc, CDc et HR dans cet exemple) avec des seuils SL (minimum ou maximum) associés, tels que définis dans les règles RL, pour déterminer si une ou des conditions CN sont satisfaites.

Chaque condition CN peut ainsi définir un seuil SL (maximum ou minimum) qu'il convient de comparer à la conductivité électrique corrigée CEc, la constante diélectrique corrigée CDc ou à l'humidité relative HR.

Si l'unité de détection U3 ne détecte (S14) pas que la ou les conditions CN associé à un évènement EVT selon les règles RL sont remplies, alors le procédé reprend à l'étape S8. Les étapes S8 et S10 peuvent se répéter de façon itérative afin de pouvoir surveiller le comportement du moteur 8 au cours du temps.

Dans le cas présent, on considère qu'au cours d'une étape de détection S16, l'unité de détection U3 détecte un évènement EVT (et donc une dégradation de la qualité de l'huile OL) représentatif d'un état anormal du moteur 8 si au moins une condition CN associée est satisfaite, conformément aux règles RL prédéfinies. Comme déjà indiqué, chaque évènement EVT correspond à un état anormal de l'huile de lubrification OL, c'est-à-dire à une dégradation de la qualité de cette huile par rapport à un état de référence. En détectant un tel évènement EVT, on peut en déduire que le moteur 8 rencontre un disfonctionnement associé. Pour ce faire, l'unité de détection U3 applique donc les règles RL pour déterminer si la ou les conditions CN associées à un évènement EVT sont remplies. Si tel est le cas, l'unité de détection U3 détecte un type de dégradation de la qualité de l'huile en tant qu'évènement EVT, et détecte par conséquent un état anormal que rencontre le moteur 8.

Selon un exemple particulier, sur détection (S16) d'un évènement EVT, l'unité de contrôle U4 peut déclencher (S18) au moins une action prédéfinie AT conformément aux règles RL de sorte à sécuriser le moteur 8 en conséquence.

Sur détection d'un évènement EVT, l'unité de contrôle U4 peut par exemple transmettre ou présenter une notification NF représentative de la dégradation de la qualité de l'huile détectée par le système de surveillance SY1, et éventuellement pour indiquer aussi l'état anormal que rencontre potentiellement le moteur 8. Il convient ensuite aux utilisateurs de prendre les mesures appropriées pour vérifier ces information et sécuriser le moteur 8 (et plus généralement le système moteur 2) si besoin. Cette notification NF peut être transmise à un utilisateur par tous moyens de communication approprié et/ou présentée sous toutes formes appropriées. Dans l'exemple représenté en **figure 1,** la notification NF est affichée sur l'écran 24 de l'interface utilisateur 23.

Selon un exemple particulier, sur détection d'un évènement EVT, l'unité de contrôle U4 déclenche l'envoi, par l'unité de commande U5, d'une commande CMD2 pour modifier au moins un paramètre de fonctionnement du moteur 8 (ou d'un autre composant du circuit d'huile principale C1) afin de sécuriser celui-ci ou du moins pour optimiser son fonctionnement. Pour ce faire, l'unité de contrôle U4 envoie au moins une commande CMD1 à l'unité de commande U10. Cette unité de commande U10, externe au dispositif 30, fait donc office d'interface entre l'unité de contrôle U4 et le moteur 8.

Selon un exemple particulier, l'unité de contrôle U4 commande (S18) l'arrêt automatique du moteur 8 en réponse à une dégradation de la qualité d'huile OL détectée en S16.

Dans le mode de réalisation décrit ci-avant, le système de surveillance SY1 réalise un traitement S12 au cours de l'analyse S10 pour obtenir des deuxièmes paramètres PR2, à savoir CEc, CDc et HR, à partir des premiers paramètres (T, P, HR, CE, CD) mesurés sur l'huile OL en S8. Dans ce cas particulier, l'humidité relative HR est utilisée en tant que deuxième paramètre PR2 sans traitement particulier.

En variante, le système de surveillance SY1 peut comparer directement les premiers paramètres PR1 à des seuils SL (minimum ou maximum) associés tels que définis dans les règles RL. Dans ce cas, il n'est pas nécessaire de réaliser le traitement S12 pour obtenir des deuxièmes paramètres PR1 à partir des premiers paramètres PR1.

Le recours à la conductivité électrique corrigée CEc et à la constante diélectrique corrigée CDc est toutefois avantageux en ce qu'il permet d'améliorer la précision et la fiabilité du système de surveillance SY1 dans la mesure où ses résultats sont moins affectés par les éventuels changements de conditions climatiques auxquels est exposé le système moteur 2, comparant ainsi les résultats à iso-condition.

Les étapes S8 et S10 peuvent être réalisés de façon itérative tant qu'un évènement EVT n'a pas été détecté (et se poursuivre éventuellement après), afin de permettre une surveillance en continu de l'état du moteur 8.

Par ailleurs, on notera que dans l'exemple décrit ci-avant en référence à la **figure 1,** le point de prélèvement 18 où le connecteur 18 se connecte au circuit d'huile principal C1 se situe entre la pompe 4 et le moteur 8. En plaçant ainsi le point de prélèvement 18 en amont du filtre 6 dans le circuit d'huile C1 (vis-à-vis du flux d'huile OL), on permet au système de surveillance SY1 de contrôler de façon efficace la qualité de l'huile OL dans la mesure où les mesures sont réalisées sur l'huile OL avant qu'elle soit filtrée dans le filtre à huile 6, ce qui permet de détecter la présence d'éventuelles pollutions, boues, suies, dégradations ou autres dans l'huile OL et donc dans le moteur 8. En effet, le filtre à huile 6 est susceptible de masquer au moins partiellement l'état de pollution de l'huile OL causé par des disfonctionnements éventuels du moteur 8.

Selon un mode de réalisation particulier, le point de prélèvement 18 au niveau duquel le connecteur 18 de la canalisation d'entrée 12 est connecté au circuit d'huile C1 se situe :

- entre la pompe 4 et le filtre à huile 6 de sorte à être en aval de la pompe 4 et en amont du moteur 8 (comme représenté par exemple en **figure 1)** ; ou

- entre la pompe 4 et le moteur 8 de sorte à être en aval du moteur 8 et en amont de la pompe 4.

En variante, la pompe peut être positionnée en sortie du moteur 8. Dans ce cas, il est possible de positionner le point de prélèvement 18 entre le moteur 8 et le carter 10 (en aval du moteur 8 et en amont du carter 10).

L'invention permet donc de surveiller l'état d'un moteur mécanique en cours de fonctionnement à partir de la qualité de l'huile circulant dans le circuit d'huile du moteur. A partir de la mesure de paramètres représentatifs de la qualité de l'huile, le système de l'invention est capable de détecter une éventuelle dégradation et/ou pollution de la qualité de l'huile indiquant un état anormal du moteur. Cette surveillance peut être réalisée en continu, ou de manière périodique ou régulière, de façon à monitorer l'état opérationnel du moteur alors même que celui-ci fonctionne.

L'invention permet de détecter de façon précoce (voire en temps réel) des disfonctionnements, anomalies, avaries, déviations de fonctionnement ou autres qu'un moteur est susceptible de rencontrer au cours de son cycle de vie.

L'invention permet en particulier de vérifier si un moteur se trouve dans des conditions opérationnelles ou si ses performances sont dégradées en raison d'un disfonctionnement quelconque. Grâce à l'invention, une surveillance aisée, rapide et fiable d'un moteur peut être réalisée, ce qui permet d'effectuer si besoin une maintenance efficace du moteur.

L'invention permet en outre, si besoin, d'avertir l'utilisateur d'un problème que rencontre le moteur et de déclencher éventuellement des actions prédéfinies pour sécuriser automatiquement le moteur ou modifier ses réglages.

L'invention est en outre capable d'opérer sans perturber le bon fonctionnement du moteur et plus généralement du circuit d'huile. La configuration en dérivation du système de surveillance SY1 (et plus précisément de l'unité de capteur U1) permet si besoin d'isoler les capteurs sans perturber le circuit d'huile principal du moteur.

On comprend que le choix des premiers paramètres PR1, et éventuellement des deuxièmes paramètres PR2, qui sont pris en compte par le système de surveillance SY1 lors de l'analyse S10 **(figure 2)** est laissé à la discrétion de l'homme du métier, ce choix pouvant varier en fonction du cas d'usage. Ces paramètres sont choisis et analysés pour permettre la détection d'un ou plusieurs états prédéfinis du moteur (disfonctionnement ou autre).

Comme indiqué précédemment, les capteurs SN peuvent être configurés pour mesurer, parmi les premiers paramètres PR1, au moins un paramètre PT caractérisant des particules métalliques (ferreuses et/ou non ferreuses) susceptibles d'être présentes dans l'huile OL. Les premiers paramètres PR1 peuvent ainsi comprendre en tant que paramètre PT au moins l'un parmi : la quantité de particules métalliques présentes dans l'huile OL, la taille de particules métalliques présentes dans l'huile OL et le poids de particules métallique présentes dans l'huile OL. Chacun de ces paramètres PT peut être comparé lors de l'analyse S10 **(figure 2)** avec un ou plusieurs seuils SL associés tels définis dans les conditions CN pour déterminer si un évènement EVT est détecté conformément aux règles RL.

La prise en compte des particules métalliques pour évaluer la qualité de l'huile OL circulant dans le circuit d'huile principal C1 permet d'améliorer le procédé de surveillance de l'invention. En particulier, certains états anormaux du moteur 8 peuvent être détectés à partir notamment de la caractérisation des particules métalliques susceptibles de polluer l'huile OL.

De manière générale, l'écran d'affichage 36 **(figure 2)** peut être configuré pour afficher en temps réel, sous forme de jauges par exemple, au moins un paramètre représentatif de la qualité de l'huile mesurée par le système de surveillance SY1. L'affichage peut porter sur un ou des premiers paramètres PR1 et/ deuxièmes paramètres PR2, voire alternativement ou en supplément, sur au moins un troisième paramètre représentant de manière synthétique l'état de l'huile OL.

Par ailleurs, comme déjà indiqué, le type de traitement réalisé en S12 **(figure 2)** peut varier selon le cas. Autrement dit, la nature des deuxièmes paramètres PR2 calculés et pris en compte peut être adaptée si besoin.

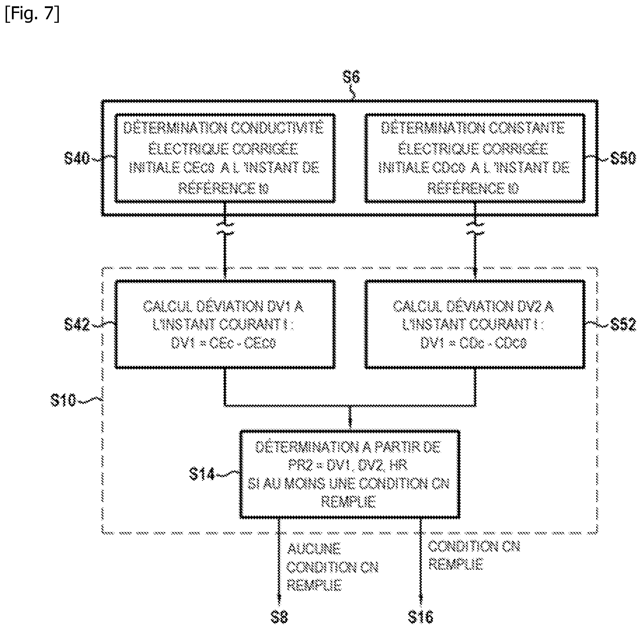

Selon un mode de réalisation particulier représenté en **figures 7-10,** le système de surveillance SY1 prend en compte, en tant que deuxième paramètre PR2, les déviations de la conductivité électrique corrigée CEc et de la constante diélectrique corrigée CDc vis-à-vis de valeur de référence respectives correspondant à un état de référence du circuit d'huile principal C1.

Plus spécifiquement, au cours d'une phase (ou étape) d'apprentissage S6 représentée en **figure 2,** l'unité d'analyse U2 détermine la conductivité électrique corrigée CEc0, dite conductivité électrique corrigée initiale, de l'huile OL à un instant de référence t0 (S40, **figure 7).** Pour ce faire, l'unité d'analyse U2 détermine la conductivité électrique CE mesurée à cet instant initial t0 par l'unité de capteur U1, puis calcule à partir de la conductivité électrique CE mesurée à t0 la conductivité électrique corrigée initiale CEc0 en appliquant la première fonction polynomiale finale f3CE, de façon analogue à l'étape S12a décrite précédemment. Selon un exemple particulier, l'instant de référence t0 peut correspondre à une période de référence (de plusieurs heures par exemple) au cours de laquelle la conductivité électrique CE est moyennée pour obtenir la conductivité électrique CE mesurée à cet instant t0.

Au cours de cette phase d'apprentissage S6 représentée en **figure 2,** l'unité d'analyse U2 détermine également la constante diélectrique corrigée CED0, dite constante diélectrique corrigée initiale, de l'huile OL à l'instant de référence t0 (S50, **figure 7**). Pour ce faire, l'unité d'analyse U2 détermine la constante diélectrique CD mesurée à cet instant initial t0 par l'unité de capteur U1, puis calcule à partir de la constante diélectrique CD mesuré à t0 la constante diélectrique corrigée initiale CDc0 en appliquant la deuxième fonction polynomiale finale f3CD, de façon analogue à l'étape S12b décrite précédemment. Selon un exemple particulier, de façon analogue à ce qui est indiqué ci-dessus pour CEc0, l'instant de référence t0 peut correspondre à une période de référence (de plusieurs heures par exemple) au cours de laquelle la constante diélectrique CD est moyennée pour obtenir la constante diélectrique CD mesurée à cet instant t0.

Les étapes S40 et S50 peuvent être réalisées simultanément ou selon un ordre quelconque.

L'instant de référence t0 correspond à un instant où le moteur 8 se trouve dans un état de référence (ou état initial), par exemple lors d'une mise en service du moteur (par exemple lors d'une toute première mise en service (moteur neuf) ou lors d'une remise en service consécutive à une vidange d'huile).

Ultérieurement, au cours de l'étape de traitement S12, l'unité d'analyse U2 réalise les étapes S42 et S52 suivantes **(figures 2** et **7)**. Plus spécifiquement, au cours d'une étape de calcul S42, l'unité d'analyse U2 détermine une première déviation DEV1 entre une conductivité électrique corrigée CEc obtenue en S12a à un instant courant t (ultérieur à t0) et la conductivité électrique corrigée initiale CEc0 obtenue en S40. Autrement dit :

$$[\text{Math. 3}] \qquad DEV1 = (CEc - CEc0)/CEc0$$

De même, au cours d'une étape de calcul S52, l'unité d'analyse U2 détermine une deuxième déviation DEV2 entre une constante diélectrique corrigée CDc obtenue en S12b à un instant courant t (ultérieur à t0) et la constante diélectrique corrigée initiale CDc0 obtenue en S40. Autrement dit :

$$[\text{Math. 4}] \qquad DEV2 = (CDc - CDc0)/CDc0$$

L'unité d'analyse U2 réalise ensuite l'étape de détermination S14 **(figure 7)** de façon analogue à ce qui a été décrit précédemment en référence à la **figure 2.** Dans cet exemple particulier, l'unité d'analyse U2 utilise (S14) en tant que deuxièmes paramètres PR2 les déviations DEV1 et DEV2 préalablement obtenues ainsi que l'humidité relative HR mesurée en S8 pour déterminer, sur la base des règles RL, si au moins une condition CN est remplie. Pour ce faire, l'unité d'analyse U2 compare donc ces deuxièmes paramètres PR2 avec des seuils SL (minimum ou maximum) respectifs définis dans les conditions CN des règles RL.

Si la ou les conditions CN associées à un même évènement EVT particulier sont remplies, alors le procédé se poursuit en détectant (S16) ledit évènement EVT et en déclenchant (S18) au moins une action de sécurisation AT, comme déjà décrit précédemment en référence à la **figure 2.** Dans le cas contraire, le procédé se poursuit en réitérant les étapes S8 et S10, comme déjà expliqué.

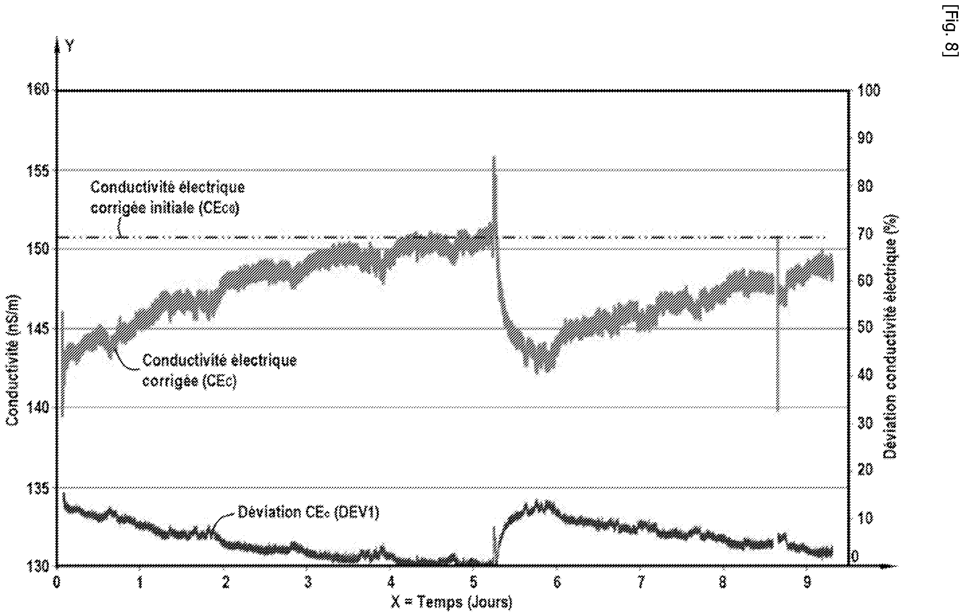

A titre d'exemple, la **figure 8** représente dans un cas particulier la conductivité électrique corrigée initiale CEc0 ainsi que l'évolution au cours du temps de la conductivité électrique corrigée CEc et de la première déviation DEV1 représentant l'écart entre CEc et CEc0.

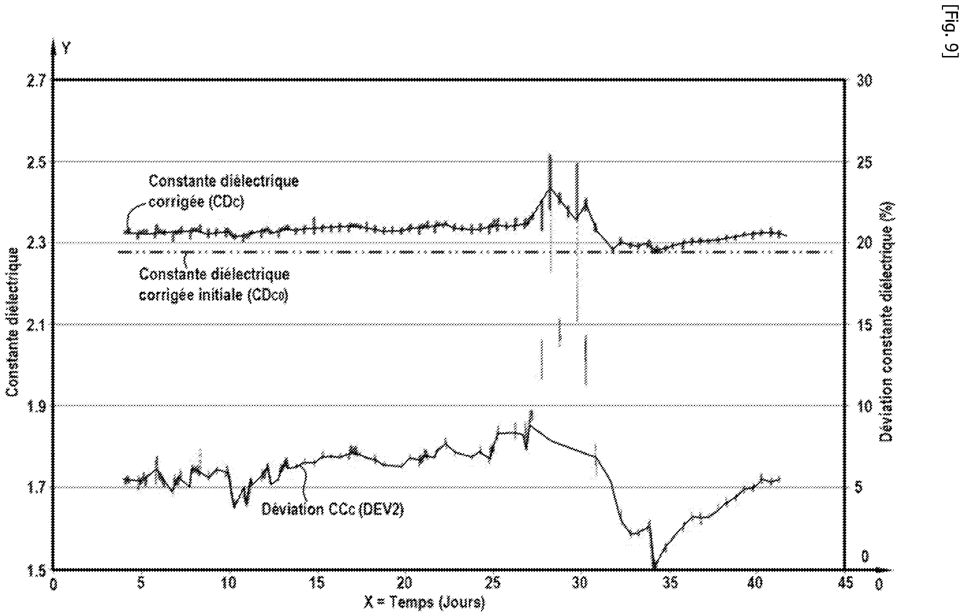

A titre d'exemple, la **figure 9** représente dans un cas particulier la constante diélectrique corrigée initiale CDc0 ainsi que l'évolution au cours du temps de la constante diélectrique corrigée CDc et de la deuxième déviation DEV2 représentant l'écart entre CDc et CDc0.

Au prenant en compte, en tant que deuxièmes paramètres PR2, les déviations de la conductivité corrigée initiale CEc0 et de la constante diélectrique corrigée initiale CDc0 à partir d'un état de référence, le système de surveillance SY1 de l'invention est capable de détecter de façon efficace et fiable des dégradations progressives au cours du temps qui sont susceptibles d'impacter la qualité de l'huile OL suite à un disfonctionnement ou un état anormal du moteur 8.

Selon un exemple particulier, seul l'une parmi les déviations DEV1 et DEV2 est calculée et prise en compte lors de l'analyse S10 du procédé de l'invention.

Par ailleurs, comme déjà indiqué, le contenu des règles RL, et notamment la nature et le nombre de conditions CN applicables ainsi que le type des évènements EVT associés, peut être adapté au cas par cas. Diverses associations entre conditions CN et évènements EVT détectés peuvent être prédéfinies et représentées dans un tableau de diagnostic.

Les règles RL peuvent par exemple prévoir qu'au moins un évènement EVT est détecté si une unique déviation seulement parmi les déviations DEV1 et DEV2 atteint un seuil SL (minimum ou maximum), ou alternativement, si les 2 déviations DEV1 et DEV2 atteignent chacune un seuil SL respectif (minimum ou maximum), en prenant éventuellement également en compte l'humidité relative HR vis-à-vis d'un seuil respectif (minimum ou maximum).

Des analyses et tests du système de surveillance SY1 mis en oeuvre dans le système moteur 2 peuvent être nécessaires pour définir, dans chaque cas d'espèce, une matrice de diagnostic définissant de façon adéquate les conditions CN à satisfaire pour détecter un évènement EVT associé, à partir d'un ou plusieurs seuils SL appliqués à certains paramètres PR1 et/ou PR2.

La **figure 10** représente ainsi les règles RL sous forme d'un tableau de diagnostic, selon un exemple particulier. Selon cet exemple, les déviations DEV1, DEV2 et l'humidité relative HR sont prises en compte en tant que deuxièmes paramètres PR2 dans le procédé de surveillance de l'invention pour déterminer si un évènement EVT selon les règles RL est détecté ou non en S16. Les règles RL définissent 7 évènements distincts EVT0-EVT7 qui sont chacun associés à 1, 2 ou 3 conditions CN respectives qui doivent être remplies pour que l'évènement EVT associé soit détecté.

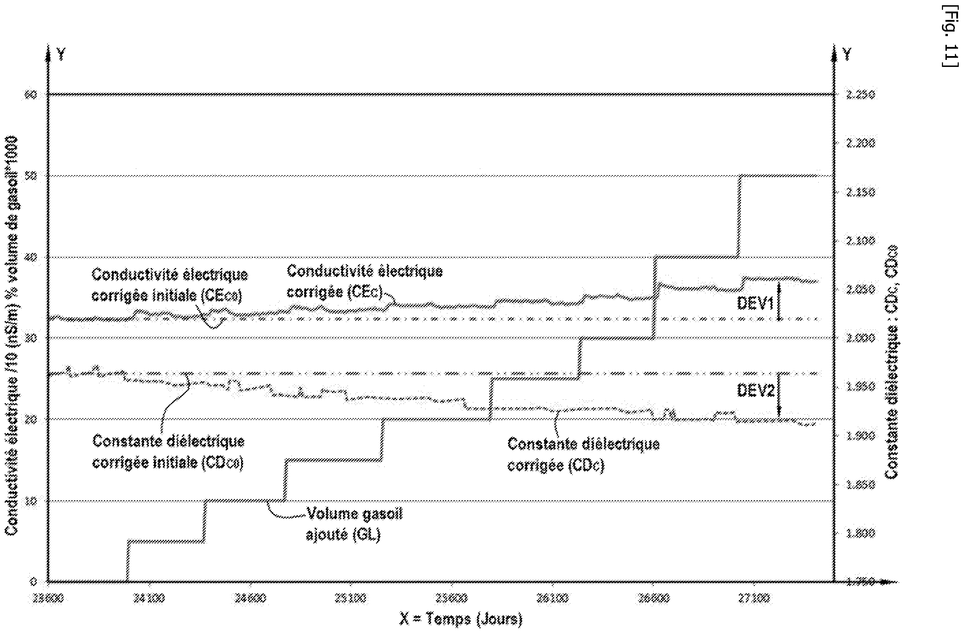

La **figure 11** représente par exemple un cas particulier où une pollution au carburant léger (ou fuel léger) dans l'huile OL est détectée en tant qu'évènement EVT5. Dans ce document, un carburant léger désigne un carburant se caractérisant en ce que sa viscosité à une température de 40°C est inférieure ou égale à 100 centistokes (cSt) correspondant à $10^{-4}$ $m^2$/s, ce qui signifie qu'un carburant léger est à l'état liquide à température et pression ambiante. Au contraire du fuel léger, un carburant est dit « lourd » s'il doit être maintenu à une température minimum de 70°C pour rester à l'état liquide (en dessous une température de 40°C, un carburant lourd devient pâteux et inexploitable dans le moteur).

Conformément aux règles RL représentées en **figure 10,** l'évènement EVT5 est détecté si les conditions CN suivantes sont remplies :

- la première déviation DEV1 de la conductivité électrique corrigée CEc par rapport à la conductivité électrique corrigée initiale CEc0 est supérieure ou égale à un seuil maximum noté +DevCondAlmax5 ; et

- la deuxième déviation DEV2 de la constante diélectrique corrigée CDc par rapport à la constante diélectrique corrigée initiale CDc0 est inférieure ou égale à un seuil minimum noté -DevDcAlmin5.

Selon un exemple particulier, +DevCondAlmax5 est égal à 4,5 et -DevDcAlmin5 est égal à 2. Selon un autre exemple, +DevCondAlmax5 est égal à 12 et -DevDcAlmin5 est égal à -3.

Comme représenté en **figure 11,** on suppose par exemple qu'une pollution au gasoil apparaît dans l'huile de lubrification OL circulant dans le circuit d'huile principal C1. Cette pollution résulte d'un disfonctionnement du moteur, tel que par exemple une anomalie au niveau de joints moteur, culasses, chemises, segmentation, injecteurs, pompes d'injection, etc. L'ajout de gasoil dans l'huile OL se manifeste dans cet exemple par une augmentation de la première déviation DEV1 et par une diminution de la deuxième déviation DEV2, au cours du temps.

Sur détection que DEV1 devient supérieure ou égale à +DevCondAlmax5 et que DEV2 devient inférieure ou égale à -DevDcAlmin5, le système de surveillance SY1 détecte (S16) une dégradation de l'huile OL, à savoir une pollution au carburant léger, qui est représentative d'un disfonctionnement ou d'un état anormal du moteur.

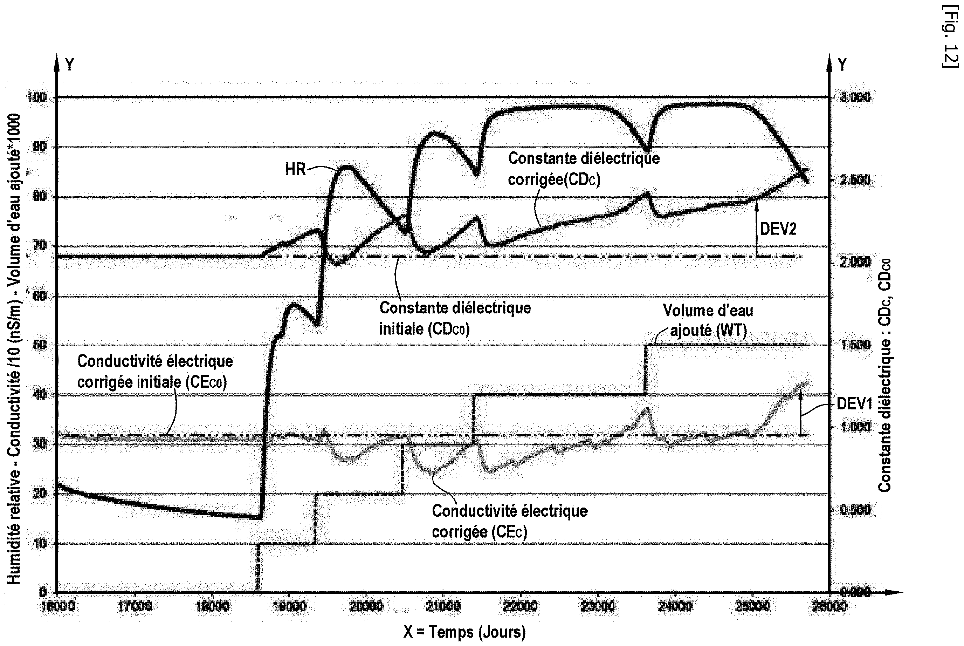

La **figure 12** représente par exemple un cas particulier où une pollution à l'eau et/ou au carburant dans l'huile OL est détectée en tant qu'évènement EVT1EVT2. Conformément aux règles RL représentées en **figure 10,** l'évènement EVT2 est détecté si la condition CN suivante est remplie : la première déviation DEV1 de la conductivité électrique corrigée CEc par rapport à la conductivité électrique corrigée initiale CEc0 est supérieure ou égale à un seuil maximum noté -DevDCAlmin3.

Selon un exemple particulier, DevDCAlmin3 est égal à -5, voire à -3.

Comme représenté en **figure 12,** on suppose par exemple qu'une pollution à l'eau apparaît dans l'huile de lubrification OL circulant dans le circuit d'huile principal C1. Cette pollution à l'eau témoigne d'une viscosité excessive de l'huile dans ce cas particulier et d'une dégradation possible du moteur 8, notamment du TBN de l'huile. Le TBN désigne le nombre total de base (pour « Total Base Number » en anglais), exprimé en mg KOH/g d'huile, qui caractérise la réserve d'alcalinité de l'huile, et donc sa capacité de neutralisation des acides de combustion. Le paramètre TBN est particulièrement représentatif de l'état des huiles moteurs, diesel en particulier, notamment dans le cas d'une utilisation avec un carburant fortement soufré.

Dans cet exemple, l'ajout d'eau dans l'huile OL se manifeste en particulier par une augmentation au cours du temps de la première déviation DEV1. Bien qu'une augmentation de la deuxième déviation DEV2 soit aussi détectable lorsque la quantité d'eau ajoutée augmente, il a été observé que la prise en compte de ce paramètre n'est pas nécessaire dans ce cas particulier pour détecter une pollution à l'eau dans l'huile OL.

Sur détection que la déviation DEV2 devient inférieure ou égale à -DevCondAlmax1, le système de surveillance SY1 détecte (S16) une dégradation de l'huile OL, à savoir une pollution à l'eau, qui est représentative d'un disfonctionnement ou d'un état anormal du moteur.

A noter qu'une contamination de l'huile OL à l'eau peut aussi être détectée en tant qu'évènement EVT0 **(figure 10)** en déterminant si l'humidité relative HR est supérieure ou égale à un seuil maximum noté HRAImax0.

Selon un exemple particulier, l'unité de détection U3 est configurée selon les règles RL pour détecter les évènements EVT suivants :

- détection d'un niveau de TBN et/ou viscosité anormal de l'huile OL si la première déviation DEV1 atteint le premier seuil minimum -DevCondAlmin1 (EVT1) ;

- détection d'une potentielle pollution au carburant de l'huile OL avec un niveau de TBN et/ou viscosité anormal si la première déviation DEV1 atteint un deuxième seuil maximum +DevCondAlmax2 (EVT2) ;

- détection d'une contamination de l'huile potentiellement au carburant ou autre si la deuxième déviation DEV2 atteint un troisième seuil minimum - DevDCAlmin3 (EVT3) ; et

- détection d'une contamination de l'huile OL potentiellement aux suies de combustion si la deuxième déviation DEV2 atteint un quatrième seuil maximum +DevDCAlmax4 (EVT4).

Selon un exemple particulier, l'unité de détection U3 est configurée selon les règles RL pour détecter les évènements EVT suivants :

- détection d'une potentielle pollution de l'huile OL au carburant léger (ou fuel léger) si la première déviation DEV1 atteint un cinquième seuil maximum +DevCondAlmax5 et si la deuxième déviation DEV2 atteint un sixième seuil minimum -DevDCAlmin5 (EVT5) ;

- détection d'une potentielle pollution de l'huile OL au fuel lourd si la première déviation DEV1 atteint un septième seuil maximum +DevCondAlmax6 et si la deuxième déviation DEV2 atteint un huitième seuil maximum +DevDCAlmax6 (EVT6) ; et

- détection potentielle d'un taux anormal (ou teneur anormale) de l'huile OL en fer si l'humidité relative HR atteint un neuvième seuil maximum HRAlmax7, si la première déviation DEV1 atteint un dixième seuil maximum +DevCondAlmax7 et si la deuxième déviation DEV2 atteint un onzième seuil maximum +DevDCAlmax7 (EVT7).

Une quelconque combinaison des règles RL décrites ci-avant peut être envisagée.

Par ailleurs, comme déjà indiqué, une calibration S4 **(figure 2)** peut être nécessaire lors d'une configuration initiale S2 préalable aux étapes S8-18 afin de déterminer les fonctions polynomiales finales f3CE et f3CD, et plus particulièrement leurs coefficients respectifs CFCE et CFCD, permettant de calculer la conductivité électrique corrigée CEc et la constante diélectrique corrigée CDc.

Pour rappel, on considère ici que les paramètres CEc et CDc se définissent comme suit :

$$CEc = [(a6 \cdot T^6 + a5 \cdot T^5 + a4 \cdot T^4 + a3 \cdot T^3 + a2 \cdot T^2 + a1 \cdot T + a0) + (b6 \cdot P^6 + b5 \cdot P^5 + b4 \cdot P^4 + b3 \cdot P^3 + b2 \cdot P^2 + b1 \cdot P + b0) + (c6 \cdot HR^6 + c5 \cdot HR^5 + c4 \cdot HR^4 + c3 \cdot HR^3 + c2 \cdot HR^2 + c1 \cdot HR + c0)] \cdot CE$$

$$CDc = [(d6 \cdot T^6 + d5 \cdot T^5 + d4 \cdot T^4 + d3 \cdot T^3 + d2 \cdot T^2 + d1 \cdot T + d0) + (e6 \cdot P^6 + e5 \cdot P^5 + e4 \cdot P^4 + e3 \cdot P^3 + e2 \cdot P^2 + e1 \cdot P + e0) + (f6 \cdot HR^6 + f5 \cdot HR^5 + f4 \cdot HR^4 + f3 \cdot HR^3 + f2 \cdot HR^2 + f1 \cdot HR + f0)] \cdot CD$$

Les coefficients a0-a6 (notés collectivement CFCE-T) définissent une correction CRCE-T appliquée sur la conductivité électrique CE en fonction de la température T.

Les coefficients b0-b6 (notés collectivement CFCE-P) définissent une correction CRCE-P appliquée sur la conductivité électrique CE en fonction de la pression P.

Les coefficients c0-c6 (notés collectivement CFCE-HR) définissent une correction CRCE-HR appliquée sur la conductivité électrique CE en fonction de l'humidité relative HR.

De même, les coefficients d0-d6 (notés collectivement CFCD-T) définissent une correction CRCD-T appliquée sur la constante diélectrique CD en fonction de la température T.

Les coefficients e0-e6 (notés collectivement CFCD-P) définissent une correction CRCD-P appliquée sur la constante diélectrique CD en fonction de la pression P.

Les coefficients f0-f6 (notés collectivement CFCD-HR) définissent une correction CRCD-HR appliquée sur la constante diélectrique CD en fonction de l'humidité relative HR.

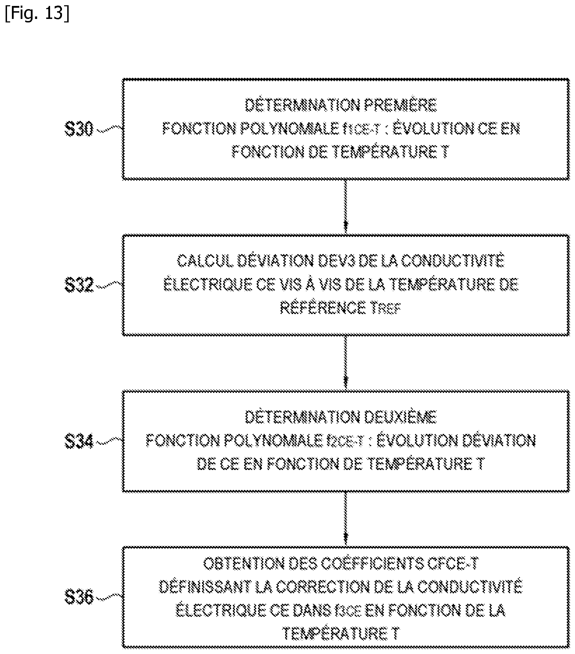

La **figure 13** représente, selon un mode de réalisation particulier, les étapes réalisées par l'unité de calibration U5 pour déterminer les coefficients CFCE-T (a0 à a6) définissant la correction polynomiale CRCE-T appliquée dans la fonction polynomiale finale f3CE sur la conductivité électrique CE en fonction de la température T, pour chaque ordre de 1 à 6 (le principe décrit ici est applicable de façon analogue à une fonction polynomiale f3CE et f3CD d'un ordre différent, de n=4 par exemple).

Plus spécifiquement, au cours d'une étape de détermination S30, l'unité de calibration U5 détermine l'évolution de la conductivité électrique CE mesurée (modèle mathématique de CE) par les capteurs SN en fonction de la température T mesurée par les capteurs SN. Pour ce faire, l'unité de calibration U5 reçoit (sous forme des signaux SG1) des valeurs de conductivité électrique CE mesurées par l'unité de capteur U1 pour différentes températures. A partir de ces valeurs, l'unité de calibration U5 détermine (S30) une première fonction polynomiale f1CE représentant l'évolution de la conductivité électrique CE de l'huile de lubrification OL en fonction de la température T.

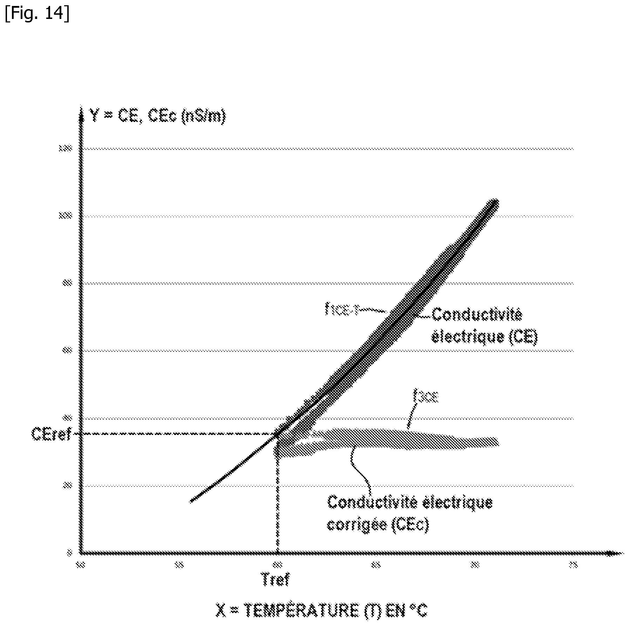

La **figure 14** représente un exemple d'une telle fonction première polynomiale f1CE-T déterminée en S30 par l'unité de calibration U5. Cette fonction f1CE est déterminée en réalisant une régression polynomiale à partir des couples de valeur [CE, T] précédemment obtenus.

Au cours d'une étape de calcul S32 **(figure 13),** l'unité de calibration U5 détermine une déviation notée DEV3, en fonction de la température T, de la conductivité électrique CE vis-à-vis d'une conductivité électrique de référence notée CEref. Cette conductivité électrique de référence CEref est la conductivité électrique CE définie par la fonction f1CE-T pour une température de référence Tref prédéfinie. Cette température Tref définit une température à laquelle la correction CRCE-T appliquée sur la conductivité électrique CE pour obtenir une conductivité électrique corrigée CEc doit être nulle. La température de référence Tref peut être choisie par exemple entre 50 °C et 85 °C. Dans cet exemple, la température de référence Tref est égale à 60 °C, température approximative du moteur 8 en régime normal.

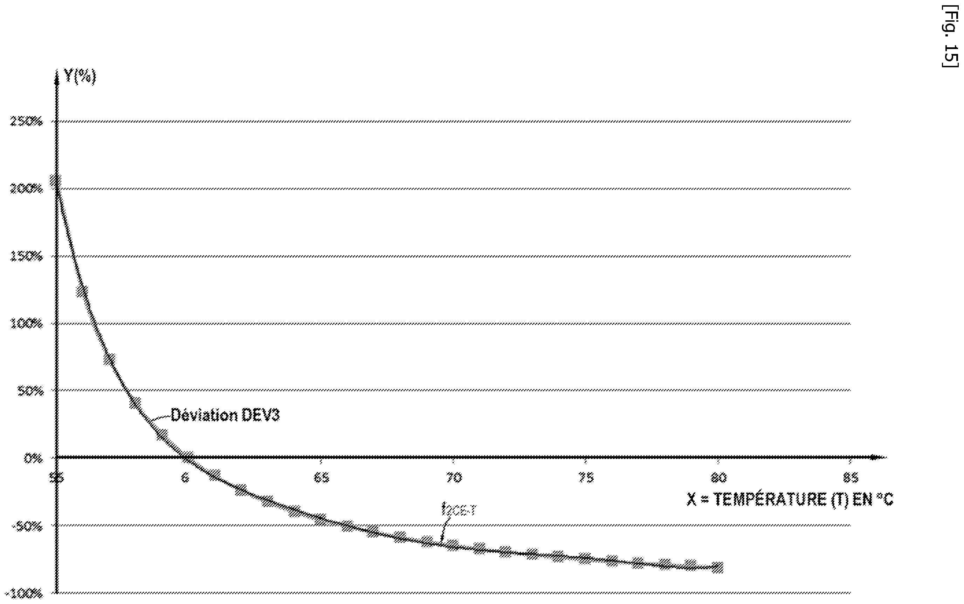

Comme représenté en **figure 15,** le module de calibration U5 détermine (S34, **figure 13**) ensuite à partir de la première fonction polynomiale f1CE-T, et plus particulièrement à partir de la déviation DV3 calculée en S32 en fonction de la température T, une deuxième fonction polynomiale f2CE-T représentant l'évolution de la déviation DV3 en fonction de la température T.

Cette deuxième fonction polynomiale f2CE-T définit la correction CRCE-T appliquée par la fonction polynomiale finale f3CE en fonction de la température T. Cette deuxième fonction f2CE-T est ainsi pondérée par les coefficients a0-a6 définissant la correction CRCE-T appliquée par la fonction polynomiale finale f3CE sur la conductivité électrique CE en fonction de la température, de sorte que cette correction CRCE-T soit nulle à la température de référence Tref.

L'unité de calibration U5 obtient (extrait) ainsi en S36 les coefficients CFCE-T (a0-a6) à appliquer dans la première fonction polynomiale finale f3CE pour calculer la conductivité électrique corrigée CEc.

Les autres coefficients CFCE (à savoir b0-b6 et c0-c6) de la fonction f3CE ainsi que les coefficients CFCD (d0-d6, e0-e6 et f0-f6) de la fonction f3CD sont également déterminés par l'unité de calibration U5 en appliquant de façon analogue les étapes S30-S36 décrites ci-avant. En particulier, une première fonction polynomiale puis une deuxième fonction polynomiale sont déterminées afin d'en déduire les coefficients définissant respectivement les corrections CRCE-P et CRCE-HR dans la première fonction polynomiale finale f3CE et les corrections CRCD-T, CRCD-P et CRCD-HR dans la deuxième fonction polynomiale finale f3CD.

Ainsi, l'unité de calibration U5 réalise les opérations suivantes de façon analogue à l'étape S30 :

- détermination d'une première fonction polynomiale f1CE-P représentant l'évolution de la conductivité électrique CE mesurée par les capteurs SN en fonction de la pression P mesurée par les capteurs SN ;

- détermination d'une première fonction polynomiale f1CE-HR représentant l'évolution de la conductivité électrique CE mesurée par les capteurs SN en fonction de l'humidité relative HR mesurée les capteurs SN ;

- détermination d'une première fonction polynomiale f1CD-T représentant l'évolution de la constante diélectrique CD mesuré par les capteurs SN en fonction de la température T mesurée par les capteurs SN ;

- détermination d'une première fonction polynomiale f1CD-P représentant l'évolution de la constante diélectrique CD mesuré par les capteurs SN en fonction de la pression P mesurée par les capteurs SN ;

- détermination d'une première fonction polynomiale f1CD-HR représentant l'évolution de la constante diélectrique mesuré par ledit au moins un capteur en fonction de l'humidité relative mesuré par ledit au moins un capteur ;

L'unité de calibration U5 réalise ensuite les opérations suivantes de façon analogue aux étapes S32-S34 :

- détermination, à partir de la première fonction polynomiale f1CE-P, d'une deuxième fonction polynomiale f2CE-P définissant la correction CRCE-P de la conductivité électrique CE en fonction de la pression P, cette deuxième fonction polynomiale f2CE-P étant pondérée par les coefficients CFCE-T (b0-b6) définissant la correction CRCE-P de sorte à ce qu'elle soit nulle à une pression de référence Pref ;

- détermination, à partir de la première fonction polynomiale f1CE-HR, d'une deuxième fonction polynomiale f2CE-HR définissant une correction de la conductivité électrique CE en fonction de l'humidité relative HR, cette deuxième fonction polynomiale f2CE-HR étant pondérée par les coefficients CFCE-HR (b0-b6) définissant la correction CRCE-HR de sorte qu'elle soit nulle à une humidité relative de référence HRref ;

- détermination, à partir de la première fonction polynomiale f1CD-T, d'une deuxième fonction polynomiale f2CD-T définissant une correction CRCD-T de la constante diélectrique CD en fonction de la température T, cette deuxième fonction polynomiale f2CD-T étant pondérée par les coefficients CFCD-T (d0-d6) définissant la correction CRCD-T de sorte à ce qu'elle soit nulle à la température de référence Tref ;

- détermination, à partir de la première fonction polynomiale f1CD-P, d'une deuxième fonction polynomiale f2CD-P définissant une correction CRCD-P de la constante diélectrique CD en fonction de la pression P, cette deuxième fonction polynomiale f2CD-P étant pondérée par les coefficients CFCD-P (e0-e6) définissant la correction CRCD-P de sorte à ce qu'elle soit nulle à la pression de référence Pref ;

- détermination, à partir de la première fonction polynomiale f1CD-HR, d'une deuxième fonction polynomiale f2CD-HR définissant une correction CRCD-HR de la constante diélectrique CD en fonction de l'humidité relative HR, cette deuxième fonction polynomiale f2CD-HR étant pondérée par les coefficients CFCD-HR (f0-f6) définissant la correction CRCD-HR de sorte à ce qu'elle soit nulle à l'humidité relative de référence HRref.

Dans l'exemple considéré ici, la pression de référence Pref est comprise entre 0,5 et 10 bars, voire entre 3 et 5 bars. Pref est par exemple égale à 4 bars. Par ailleurs, l'humidité relative de référence HR est comprise dans cet exemple entre 2% et 60%, voire entre 5% et 25%. HRref est par exemple égale à 15%.

Les coefficients polynomiaux CFCE et CFCD sont donc ici choisis de sorte que la correction respective appliquée sur CE et CD par les fonctions polynomiales finales f3CE et f3CD soit nulle pour la température de référence Tref, la pression de référence Pref et l'humidité relative de référence HRref.

Les étapes décrites ci-dessus permettent à l'unité de calibration U5 de déterminer automatiquement la valeur des coefficients CFCE et CFCD lors de l'étape de calibration S4 **(figure 2)**. Le module d'analyse U2 applique ainsi les coefficients CFCE et CFCD dans respectivement les fonctions polynomiales finales f3CE et f3CD pour déterminer lors du traitement S12 la conductivité électrique corrigée CEc et la constante diélectrique corrigée CDc en tant que de deuxièmes paramètres PR2. D'autres mises en oeuvre de la calibration S4 sont toutefois possibles. En outre, la mise en oeuvre de l'étape de calibration S4 n'est pas toujours nécessaire. Alternativement, un homme du métier peut définir lui-même chacun des coefficients CFCE et CFCD.

De manière générale, un homme du métier comprendra que les modes de réalisation et variantes décrits ci-avant ne constituent que des exemples non limitatifs de mise en oeuvre de l'invention. En particulier, l'homme du métier pourra envisager une quelconque adaptation ou combinaison des modes de réalisation et variantes décrits ci-avant afin de répondre à un besoin bien particulier, l'invention étant définie dans les revendications qui suivent.

Il convient de noter en particulier que l'ordre dans lequel s'enchaînent les étapes du procédé de l'invention tel que décrit dans les modes de réalisation et variantes ci-dessus ne constitue qu'un exemple de réalisation, des variantes étant possibles.

**Revendications**

1. Système de surveillance (SY1) pour surveiller un moteur (6) comprenant :

- une unité de capteur (U1) raccordée à une canalisation d'entrée (12) et à une canalisation de sortie (12), la canalisation d'entrée comprenant un connecteur de tuyauterie hydraulique (18) configuré pour se connecter à un circuit d'huile (C1) dudit moteur, ladite unité de capteur comprenant au moins un capteur (SN) configuré pour mesurer des premiers paramètres (PR1) représentatifs de la qualité d'une huile (OL) de lubrification de moteur prélevée dans le circuit d'huile via la canalisation d'entrée, la canalisation de sortie étant apte à évacuer l'huile depuis l'unité de capteur dans le circuit d'huile ;
- une unité d'analyse (U2) configurée pour déterminer, à partir des premiers paramètres (PR1) ou de deuxièmes paramètres (PR2) obtenus par un traitement des premiers paramètres, si au moins une condition prédéfinie (CN) est satisfaite, en comparant lesdits premiers ou deuxièmes paramètres avec au moins une valeur seuil (SL) ; et
- une unité de détection (U3) configurée pour détecter une dégradation (EVT) de la qualité de l'huile représentative d'un état anormal du moteur, si ladite au moins une condition prédéfinie est satisfaite ;

dans lequel ledit traitement réalisé par l'unité d'analyse (U2) comprend au moins l'un parmi :

- détermination, en tant que deuxième paramètre, d'une conductivité électrique corrigée à partir de la conductivité électrique mesurée par ledit au moins un capteur en appliquant une première fonction polynomiale finale, la première fonction polynomiale finale définissant ladite conductivité électrique corrigée à partir de la conductivité électrique, la température, la pression et l'humidité relative mesurées par ledit au moins un capteur, ladite première fonction polynomiale finale étant pondérée par des premiers coefficients (CFCE) associés respectivement à la température, la pression et l'humidité relative pour compenser au moins en partie l'influence respective de la température, de la pression et de l'humidité relative sur la conductivité électrique mesurée par ledit au moins un capteur ; et
- détermination, en tant que deuxième paramètre, d'une constante diélectrique corrigée à partir de la constante diélectrique mesurée par ledit au moins un capteur en appliquant une deuxième fonction polynomiale finale, la deuxième fonction polynomiale finale définissant la constante diélectrique corrigée à partir de la constante diélectrique, la température, la pression et l'humidité relative mesurées par ledit au moins un capteur, ladite deuxième fonction polynomiale finale étant pondérée par des deuxièmes coefficients (CFCD) associés respectivement à la température, la pression et de l'humidité relative pour compenser au moins en partie l'influence respective de la température, de la pression et de l'humidité relative sur la constante diélectrique mesurée par ledit au moins un capteur ;

dans lequel le module d'analyse est configuré pour comparer au moins l'un parmi la conductivité électrique corrigée et la constante diélectrique corrigée avec un seuil respectif pour déterminer si ladite au moins une condition prédéfinie est satisfaite.

**2.** Système selon la revendication 1, comprenant :

- une unité de contrôle (U4) configurée, sur détection de ladite au moins une dégradation de la qualité de l'huile, pour déclencher au moins une action prédéfinie (AT) pour sécuriser le moteur.

**3.** Système selon la revendication 2, dans lequel ladite au moins une action comprend au moins l'un quelconque parmi :

- transmission ou présentation d'une notification (NF) représentative de la dégradation de la qualité de l'huile ; et
- déclenchement d'un envoi, par une unité de commande (U10), d'une commande (CMD2) pour modifier au moins un paramètre de fonctionnement du moteur.

**4.** Système selon l'une quelconque des revendications 1 à 3, dans lequel les premiers paramètres mesurés par ledit au moins un capteur comprennent les paramètres suivants :

- conductivité électrique de l'huile ;
- constante diélectrique de l'huile ;
- température de l'huile ;
- pression de l'huile ; et
- humidité relative de l'huile.

**5.** Système selon l'une quelconque des revendications 1 à 4, dans lequel les premiers paramètres comprennent au moins un paramètre caractérisant des particules métalliques susceptibles d'être présentes dans l'huile.

**6.** Système l'une quelconque des revendications 1 à 5, dans lequel le module d'analyse est configuré pour déterminer la conductivité électrique corrigée et la constante diélectrique corrigée lors dudit traitement,
ladite au moins une condition prédéfinie comprenant les conditions suivantes :

- la conductivité électrique corrigée atteint un premier seuil ; et
- la constante diélectrique corrigée atteint un deuxième seuil.

**7.** Système selon l'une quelconque des revendications 1 à 6, comprenant une unité de calibration (U5) configuré pour déterminer, préalablement à ladite analyse, les premiers et deuxièmes coefficients pondérant respectivement les première et deuxième fonctions polynomiales finales, ladite unité de calibration étant configurée pour réaliser les étapes suivantes :

- détermination d'une première fonction polynomiale f1CE-T représentant l'évolution de la conductivité électrique mesurée par ledit au moins un capteur en fonction de la température mesurée par ledit au moins un capteur ;

- détermination d'une première fonction polynomiale f1CE-P représentant l'évolution de la conductivité électrique mesurée par ledit au moins un capteur en fonction de la pression mesurée par ledit au moins un capteur ;

- détermination d'une première fonction polynomiale f1CE-HR représentant l'évolution de la conductivité électrique mesurée par ledit au moins un capteur en fonction de l'humidité relative mesurée par ledit au moins un capteur ;

- détermination d'une première fonction polynomiale f1CD-T représentant l'évolution de la constante diélectrique mesurée par ledit au moins un capteur en fonction de la température mesurée par ledit au moins un capteur ;

- détermination d'une première fonction polynomiale f1CD-P représentant l'évolution de la constante diélectrique mesurée par ledit au moins un capteur en fonction de la pression mesurée par ledit au moins un capteur ;

- détermination d'une première fonction polynomiale f1CD-HR représentant l'évolution de la constante diélectrique mesurée par ledit au moins un capteur en fonction de l'humidité relative mesurée par ledit au moins un capteur ;

- détermination, à partir de la première fonction polynomiale f1CE-T, d'une deuxième fonction polynomiale f2CE-T définissant une correction CRCE-T de la conductivité électrique en fonction de la température, ladite deuxième fonction polynomiale f2CE-T étant pondérée par desdits premiers coefficients définissant ladite correction CRCE-T de sorte à ce qu'elle soit nulle à une température de référence ;

- détermination, à partir de la première fonction polynomiale f1CE-P, d'une deuxième fonction polynomiale f2CE-P définissant une correction CRCE-P de la conductivité électrique en fonction de la pression, ladite deuxième fonction polynomiale f2CE-P étant pondérée par desdits premiers coefficients définissant ladite correction de sorte à ce qu'elle soit nulle à une pression de référence ;

- détermination, à partir de la première fonction polynomiale f1CE-HR, d'une deuxième fonction polynomiale f2CE-HR définissant une correction CRCE-HR de la conductivité électrique en fonction de l'humidité relative, ladite deuxième fonction polynomiale f2CE-HR étant pondérée par desdits premiers coefficients définissant ladite correction de sorte à ce qu'elle soit nulle à une humidité relative de référence ;

- détermination, à partir de la première fonction polynomiale f1CD-T, d'une deuxième fonction polynomiale f2CD-T définissant une correction CRCD-T de la constante diélectrique en fonction de la température, ladite deuxième fonction polynomiale f2CD-T étant pondérée par desdits deuxièmes coefficients définissant ladite correction de sorte à ce qu'elle soit nulle à la température de référence ;

- détermination, à partir de la première fonction polynomiale f1CD-P, d'une deuxième fonction polynomiale f2CD-P définissant une correction CRCD-P de la constante diélectrique en fonction de la pression, ladite deuxième fonction polynomiale f2CD-P étant pondérée par desdits deuxièmes coefficients définissant ladite correction de sorte à ce qu'elle soit nulle à la pression de référence ; et

- détermination, à partir de la première fonction polynomiale f1CD-HR, d'une deuxième fonction polynomiale f2CD-HR définissant une correction CRCD-HR de la constante diélectrique en fonction de l'humidité relative, ladite deuxième fonction polynomiale f2CD-HR étant pondérée par desdits deuxièmes coefficients définissant ladite correction de sorte à ce qu'elle soit nulle à l'humidité relative de référence ;

dans lequel le module d'analyse est configuré pour appliquer lesdits premiers et deuxièmes coefficients dans respectivement les première et deuxième fonctions polynomiales finales pour déterminer lors du traitement la conductivité électrique corrigée et la constante diélectrique corrigée en tant que deuxièmes paramètres.

**8.** Système selon l'une quelconque des revendications 1 à 7, dans lequel le module d'analyse est configuré pour réaliser lors d'une phase d'apprentissage :

- détermination d'une conductivité électrique initiale corrigée et d'une constante diélectrique initiale corrigée à partir respectivement de la conductivité électrique et de la constante diélectrique mesurées par ledit au moins un capteur dans un état de référence du circuit d'huile ;

dans lequel le module d'analyse est en outre configuré pour réaliser, lors dudit traitement :

- calcul d'une première déviation entre une conductivité électrique corrigée déterminée à un instant courant par rapport à la conductivité électrique initiale corrigée et d'une deuxième déviation entre une constante diélectrique corrigée déterminée à un instant courant par rapport la constante diélectrique initiale corrigée ; et

- détermination que ladite au moins une condition prédéfinie est satisfaite si au moins l'une parmi les première et deuxième déviations atteint un seuil prédéfini.

**9.** Système selon la revendication 8, dans lequel :

- si la première déviation atteint un premier seuil minimum prédéfini, le module de détection est configuré pour détecter, en tant que dégradation de la qualité de l'huile, un niveau de viscosité anormal de l'huile ;

- si la première déviation atteint un deuxième seuil maximum prédéfini, le module de détection est configuré pour détecter, en tant que dégradation de la qualité de l'huile, une pollution au carburant de l'huile ;
- si la deuxième déviation atteint un troisième seuil minimum prédéfini, le module de détection est configuré pour détecter, en tant que dégradation de la qualité de l'huile, une pollution de l'huile aux suies ; et
- si la deuxième déviation atteint un quatrième seuil maximum prédéfini, le module de détection est configuré pour détecter, en tant que dégradation de la qualité de l'huile, un taux de basicité anormal de l'huile.

10. Système selon la revendication 8 ou 9, dans lequel :

- si la première déviation atteint un cinquième seuil maximum prédéfini et si la deuxième déviation atteint un sixième seuil minimum prédéfini, le module de détection est configuré pour détecter en tant que dégradation de la qualité de l'huile une pollution de l'huile au fuel léger ;
- si la première déviation atteint un septième seuil maximum prédéfini et si la deuxième déviation atteint un huitième seuil maximum prédéfini, le module de détection est configuré pour détecter en tant que dégradation de la qualité de l'huile une pollution de l'huile au fuel lourd ; et
- si l'humidité relative atteint un neuvième seuil maximum prédéfini, si la première déviation atteint un dixième seuil maximum prédéfini et si la deuxième déviation atteint un onzième seuil maximum prédéfini, le module de détection est configuré pour détecter, en tant que dégradation de la qualité de l'huile, un taux anormal de l'huile en fer.

11. Système moteur (2) comprenant :

- un circuit d'huile comportant un moteur, une pompe pour injecter une huile de lubrification de moteur dans ledit moteur et un carter pour collecter l'huile de lubrification de moteur évacuée en sortie du moteur ; et
- un système de surveillance selon l'une quelconque des revendications 1 à 10, le connecteur de la canalisation d'entrée étant connecté au circuit d'huile de sorte à prélever de l'huile de lubrification de moteur circulant dans ledit circuit d'huile, et dans lequel la canalisation de sortie est configurée pour évacuer l'huile de lubrification dans le carter.

12. Système moteur selon la revendication 11, dans lequel le circuit d'huile comprend en outre un filtre à huile disposé entre la pompe et le moteur,
le connecteur de la canalisation d'entrée étant connecté au circuit d'huile au niveau d'un point de prélèvement situé :

- entre la pompe et le filtre à huile de sorte à être en aval de la pompe et en amont du moteur ; ou
- entre la pompe et le moteur de sorte à être en aval du moteur et en amont de la pompe.

13. Procédé de surveillance d'un moteur (8), mis en oeuvre par un système de surveillance (SY1) comprenant au moins un capteur (SN) et étant raccordé via une canalisation d'entrée (12) à un circuit d'huile (C1) dudit moteur, ledit procédé comprenant :

- mesure (S8), par ledit au moins un capteur, de premiers paramètres (PR1) représentatifs de la qualité d'une huile de lubrification (OL) de moteur prélevée dans le circuit d'huile via la canalisation d'entrée, l'huile étant évacuée après ladite mesure dans le circuit d'huile via une canalisation de sortie (14) du système de surveillance ;
- analyse (S10) pour déterminer, à partir des premiers paramètres (PR1) ou de deuxièmes paramètres (PR2) obtenus par un traitement des premiers paramètres, si au moins une condition prédéfinie est satisfaite, en comparant lesdits premiers ou deuxièmes paramètres avec au moins une valeur seuil ; et
- détection (S16) d'au moins une dégradation prédéfinie de la qualité de l'huile représentative d'un état anormal du moteur si ladite au moins une condition prédéfinie est satisfaite ;

dans lequel ledit traitement comprend au moins l'un parmi :

- détermination, en tant que deuxième paramètre, d'une conductivité électrique corrigée à partir de la conductivité électrique mesurée par ledit au moins un capteur en appliquant une première fonction polynomiale finale, la première fonction polynomiale finale définissant ladite conductivité électrique corrigée à partir de la conductivité électrique, la température, la pression et l'humidité relative mesurées par ledit au moins un capteur, ladite première fonction polynomiale finale étant pondérée par des premiers coefficients (CFCE) associés respectivement à la température, la pression et l'humidité relative pour compenser au moins en partie l'influence respective de la température, de la pression et de l'humidité relative sur la conductivité électrique mesurée par ledit au moins un capteur ; et

détermination, en tant que deuxième paramètre, d'une constante diélectrique corrigée à partir de la constante diélectrique mesurée par ledit au moins un capteur en appliquant une deuxième fonction polynomiale finale, la deuxième fonction polynomiale finale définissant la constante diélectrique corrigée à partir de la constante diélectrique, la température, la pression et l'humidité relative mesurées par ledit au moins un capteur, ladite deuxième fonction polynomiale finale étant pondérée par des deuxièmes coefficients (CFCD) associés respectivement à la température, la pression et de l'humidité relative pour compenser au moins en partie l'influence respective de la température, de la pression et de l'humidité relative sur la constante diélectrique mesurée par ledit au moins un capteur ;

- dans lequel l'analyse comprend une comparaison d'au moins l'un parmi la conductivité électrique corrigée et la constante diélectrique corrigée avec un seuil respectif pour déterminer si ladite au moins une condition prédéfinie est satisfaite.

**Patentansprüche**

1. Überwachungssystem (SY1) zur Überwachung eines Motors (6), das umfasst:

- eine Sensoreinheit (U1), die an einen Eingangskanal (12) und an einen Ausgangskanal (12) angeschlossen ist, wobei der Eingangskanal einen hydraulischen Rohrleitungsverbinder (18) umfasst, der ausgelegt ist, um sich mit einem Ölkreis (C1) des Motors zu verbinden, wobei die Sensoreinheit mindestens einen Sensor (SN) umfasst, der ausgelegt ist, um erste Parameter (PR1) zu messen, die für die Qualität eines Motorschmieröls (OL) repräsentativ sind, das dem Ölkreis über den Eingangskanal entnommen wurde, wobei der Ausgangskanal imstande ist, das Öl ab der Sensoreinheit in den Ölkreis abzuleiten;

- eine Analyseeinheit (U2), die ausgelegt ist, um ausgehend von den ersten Parametern (PR1) oder von zweiten Parametern (PR2), die durch eine Verarbeitung der ersten Parameter erhalten wurden, durch Vergleichen der ersten oder zweiten Parameter mit mindestens einem Grenzwert (SL) zu bestimmen, ob mindestens eine vorbestimmte Bedingung (CN) erfüllt ist; und

- eine Detektionseinheit (U3), die ausgelegt ist, um eine Verschlechterung (EVT) der Qualität des Öls zu ermitteln, die für einen anormalen Zustand des Motors repräsentativ ist, wenn die mindestens eine vorbestimmte Bedingung erfüllt ist;

wobei die Verarbeitung, die durch die Analyseeinheit (U2) durchgeführt wird, mindestens eins umfasst von:

- Bestimmung, als zweiten Parameter, einer korrigierten elektrischen Leitfähigkeit ausgehend von der von dem mindestens einen Sensor gemessenen elektrischen Leitfähigkeit durch Anwenden einer ersten finalen Polynomfunktion, wobei die erste finale Polynomfunktion die korrigierte elektrische Leitfähigkeit ausgehend von der elektrischen Leitfähigkeit, der Temperatur, dem Druck und der relativen Feuchtigkeit definiert, die von dem mindestens einen Sensor gemessen wurden, wobei die erste finale Polynomfunktion von ersten Koeffizienten (CFCE) gewichtet wird, die jeweils der Temperatur, dem Druck und der relativen Feuchtigkeit zugeordnet sind, um mindestens zum Teil den jeweiligen Einfluss der Temperatur, des Drucks und der relativen Feuchtigkeit auf die von dem mindestens einen Sensor gemessene elektrische Leitfähigkeit auszugleichen; und

- Bestimmung, als zweiten Parameter, einer korrigierten dielektrischen Konstante ausgehend von der von dem mindestens einen Sensor gemessenen dielektrischen Konstante durch Anwenden einer zweiten finalen Polynomfunktion, wobei die zweite finale Polynomfunktion die korrigierte dielektrische Konstante ausgehend von der dielektrischen Konstante, der Temperatur, dem Druck und der relativen Feuchtigkeit definiert, die von dem mindestens einen Sensor gemessen wurden, wobei die zweite finale Polynomfunktion von zweiten Koeffizienten (CFCD) gewichtet wird, die jeweils der Temperatur, dem Druck und der relativen Feuchtigkeit zugeordnet sind, um mindestens zum Teil den jeweiligen Einfluss der Temperatur, des Drucks und der relativen Feuchtigkeit auf die von dem mindestens einen Sensor gemessene dielektrische Konstante auszugleichen;

wobei das Analysemodul ausgelegt ist, um mindestens eins von der korrigierten elektrischen Leitfähigkeit und der korrigierten dielektrischen Konstante mit einem jeweiligen Grenzwert zu vergleichen, um zu bestimmen, ob die mindestens eine vorbestimmte Bedingung erfüllt ist.

2. System nach Anspruch 1, umfassend:

- eine Kontrolleinheit (U4), die ausgelegt ist, um nach Ermittlung mindestens einer Verschlechterung der Qualität des Öls mindestens eine vorbestimmte Aktion (AT) zur Sicherung des Motors auszulösen.

3. System nach Anspruch 2, wobei die mindestens eine Aktion mindestens eins umfasst von:

- Übertragung oder Präsentation einer Mitteilung (NF), die für die Verschlechterung der Qualität des Öls repräsentativ ist; und
- Auslösen eines Versands durch eine Steuereinheit (U10) eines Befehls (CMD2) zum Ändern mindestens eines Betriebsparameters des Motors.

4. System nach einem der Ansprüche 1 bis 3, wobei die ersten Parameter, die von dem mindestens einen Sensor gemessen wurden, die folgenden Parameter umfassen:

- elektrische Leitfähigkeit des Öls;
- dielektrische Konstante des Öls;
- Temperatur des Öls;
- Druck des Öls; und
- relative Feuchtigkeit des Öls.

5. System nach einem der Ansprüche 1 bis 4, wobei die ersten Parameter mindestens einen Parameter umfassen, der Metallpartikel charakterisiert, die in dem Öl vorhanden sein könnten.

6. System nach einem der Ansprüche 1 bis 5, wobei das Analysemodul ausgelegt ist, um die korrigierte elektrische Leitfähigkeit und die korrigierte dielektrische Konstante bei der Verarbeitung zu bestimmen, wobei die mindestens eine vorbestimmte Bedingung die folgenden Bedingungen umfasst:

- die korrigierte elektrische Leitfähigkeit erreicht einen ersten Grenzwert; und
- die korrigierte dielektrische Konstante erreicht einen zweiten Grenzwert.

7. System nach einem der Ansprüche 1 bis 6, das eine Kalibriereinheit (U5) umfasst, die ausgelegt ist, um vor der Analyse die ersten und zweiten Koeffizienten zu bestimmen, die jeweils die erste und zweite finale Polynomfunktion gewichten, wobei die Kalibriereinheit ausgelegt ist, um die folgenden Schritte durchzuführen:

- Bestimmung einer ersten Polynomfunktion f1CE-T, die die Entwicklung der elektrischen Leitfähigkeit repräsentiert, die von dem mindestens einen Sensor in Abhängigkeit von der Temperatur gemessen wurde, die von dem mindestens einen Sensor gemessen wurde;
- Bestimmung einer ersten Polynomfunktion f1CE-P, die die Entwicklung der elektrischen Leitfähigkeit repräsentiert, die von dem mindestens einen Sensor in Abhängigkeit von dem Druck gemessen wurde, der von dem mindestens einen Sensor gemessen wurde;
- Bestimmung einer ersten Polynomfunktion f1CE-HR, die die Entwicklung der elektrischen Leitfähigkeit repräsentiert, die von dem mindestens einen Sensor in Abhängigkeit von der relativen Feuchtigkeit gemessen wurde, die von dem mindestens einen Sensor gemessen wurde;
- Bestimmung einer ersten Polynomfunktion f1CD-T, die die Entwicklung der dielektrischen Konstante repräsentiert, die von dem mindestens einen Sensor in Abhängigkeit von der Temperatur gemessen wurde, die von dem mindestens einen Sensor gemessen wurde;
- Bestimmung einer ersten Polynomfunktion f1CD-P, die die Entwicklung der dielektrischen Konstante repräsentiert, die von dem mindestens einen Sensor in Abhängigkeit von dem Druck gemessen wurde, der von dem mindestens einen Sensor gemessen wurde;
- Bestimmung einer ersten Polynomfunktion f1CD-HR, die die Entwicklung der dielektrischen Konstante repräsentiert, die von dem mindestens einen Sensor in Abhängigkeit von der relativen Feuchtigkeit gemessen wurde, die von dem mindestens einen Sensor gemessen wurde;
- Bestimmung, ausgehend von der ersten Polynomfunktion f1CE-T, einer zweiten Polynomfunktion f2CE-T, die eine Korrektur CRCE-T der elektrischen Leitfähigkeit in Abhängigkeit von der Temperatur definiert, wobei die zweite Polynomfunktion f2CE-T von den ersten Koeffizienten gewichtet wird, die die Korrektur CRCE-T derart definieren, dass sie bei einer Referenztemperatur null ist;
- Bestimmung, ausgehend von der ersten Polynomfunktion f1CE-P, einer zweiten Polynomfunktion f2CE-P, die eine Korrektur CRCE-P der elektrischen Leitfähigkeit in Abhängigkeit vom Druck definiert, wobei die zweite Polynomfunktion f2CE-P von den ersten Koeffizienten gewichtet wird, die die Korrektur derart definieren, dass sie bei einem Referenzdruck null ist;
- Bestimmung, ausgehend von der ersten Polynomfunktion f1CE-HR, einer zweiten Polynomfunktion f2CE-HR, die eine Korrektur CRCE-HR der elektrischen Leitfähigkeit in Abhängigkeit von der relativen Feuchtigkeit definiert, wobei die zweite Polynomfunktion f2CE-HR von den ersten Koeffizienten gewichtet wird, die die Korrektur derart definieren, dass sie bei einer relativen Referenzfeuchtigkeit null ist;

- Bestimmung, ausgehend von der ersten Polynomfunktion f1CD-T, einer zweiten Polynomfunktion f2CD-T, die eine Korrektur CRCD-T der dielektrischen Konstante in Abhängigkeit von der Temperatur definiert, wobei die zweite Polynomfunktion f2CD-T von den zweiten Koeffizienten gewichtet wird, die die Korrektur derart definieren, dass sie bei der Referenztemperatur null ist;

- Bestimmung, ausgehend von der ersten Polynomfunktion f1CD-P, einer zweiten Polynomfunktion f2CD-P, die eine Korrektur CRCD-P der dielektrischen Konstante in Abhängigkeit vom Druck definiert, wobei die zweite Polynomfunktion f2CD-P von den zweiten Koeffizienten gewichtet wird, die die Korrektur derart definieren, dass sie beim Referenzdruck null ist; und

- Bestimmung, ausgehend von der ersten Polynomfunktion f1CD-HR, einer zweiten Polynomfunktion f2CD-HR, die eine Korrektur CRCD-HR der dielektrischen Konstante in Abhängigkeit von der relativen Feuchtigkeit definiert, wobei die zweite Polynomfunktion f2CD-HR von den zweiten Koeffizienten gewichtet wird, die die Korrektur derart definieren, dass sie bei der relativen Referenzfeuchtigkeit null ist;

wobei das Analysemodul ausgelegt ist, um die ersten und zweiten Koeffizienten in jeweils der ersten und zweiten finalen Polynomfunktion anzuwenden, um bei der Verarbeitung die korrigierte elektrische Leitfähigkeit und die korrigierte dielektrische Konstante als zweite Parameter zu bestimmen.

8. System nach einem der Ansprüche 1 bis 7, wobei das Analysemodul ausgelegt ist, um bei einer Lernphase durchzuführen:

- Bestimmung einer korrigierten elektrischen Ausgangs-Leitfähigkeit und einer korrigierten dielektrischen Ausgangs-Konstante ausgehend jeweils von der elektrischen Leitfähigkeit und von der dielektrischen Konstante, die von dem mindestens einen Sensor in einem Referenzzustand des Ölkreises gemessen wurden;

wobei das Analysemodul ferner ausgelegt ist, um bei der Verarbeitung durchzuführen:

- Berechnung einer ersten Abweichung zwischen einer korrigierten elektrischen Leitfähigkeit, die zu einem laufenden Zeitpunkt im Verhältnis zu der korrigierten elektrischen Ausgangs-Leitfähigkeit bestimmt wurde, und einer zweiten Abweichung zwischen einer korrigierten dielektrischen Konstante, die zu einem laufenden Zeitpunkt im Verhältnis zu korrigierten dielektrischen Ausgangs-Konstante bestimmt wurde; und

- Bestimmung, dass die mindestens eine vorbestimmte Bedingung erfüllt ist, wenn mindestens eine von der ersten und zweiten Abweichung einen vorbestimmten Grenzwert erreicht.

9. System nach Anspruch 8, wobei:

- wenn die erste Abweichung einen ersten vorbestimmten minimalen Grenzwert erreicht, ist das Detektionsmodul ausgelegt, um als Verschlechterung der Qualität des Öls ein anormales Viskositätsniveau des Öls zu ermitteln;

- wenn die erste Abweichung einen zweiten vorbestimmten maximalen Grenzwert erreicht, ist das Detektionsmodul ausgelegt, um als Verschlechterung der Qualität des Öls eine Kraftstoffverschmutzung des Öls zu ermitteln;

- wenn die zweite Abweichung einen dritten vorbestimmten minimalen Grenzwert erreicht, ist das Detektionsmodul ausgelegt, um als Verschlechterung der Qualität des Öls eine Rußverschmutzung des Öls zu ermitteln; und

- wenn die zweite Abweichung einen vierten vorbestimmten maximalen Grenzwert erreicht, ist das Detektionsmodul ausgelegt, um als Verschlechterung der Qualität des Öls einen anormalen Basizitätsgehalt des Öls zu ermitteln.

10. System nach Anspruch 8 oder 9, wobei:

- wenn die erste Abweichung einen fünften vorbestimmten maximalen Grenzwert erreicht und wenn die zweite Abweichung einen sechsten vorbestimmten minimalen Grenzwert erreicht, ist das Detektionsmodul ausgelegt, um als Verschlechterung der Qualität des Öls eine Leichtölverschmutzung des Öls zu ermitteln;

- wenn die erste Abweichung einen siebten vorbestimmten maximalen Grenzwert erreicht und wenn die zweite Abweichung einen achten vorbestimmten maximalen Grenzwert erreicht, ist das Detektionsmodul ausgelegt, um als Verschlechterung der Qualität des Öls eine Schwerölverschmutzung des Öls zu ermitteln; und

- wenn die relative Feuchtigkeit einen neunten vorbestimmten maximalen Grenzwert erreicht, wenn die erste Abweichung einen zehnten vorbestimmten maximalen Grenzwert erreicht und wenn die zweite Abweichung einen elften vorbestimmten maximalen Grenzwert erreicht, ist das Detektionsmodul ausgelegt, um als Verschlechterung der Qualität des Öls einen anormalen Eisengehalt des Öls zu ermitteln.

11. Motorsystem (2), umfassend:

- einen Ölkreis, der einen Motor, eine Pumpe zum Einleiten eines Motorschmieröls in den Motor und ein Gehäuse zum Sammeln des am Ausgang des Motors ausgeleiteten Motorschmieröls aufweist; und

- ein Überwachungssystem nach einem der Ansprüche 1 bis 10, wobei der Verbinder des Eingangskanals mit dem Ölkreis derart verbunden ist, dass Motorschmieröl entnommen wird, das in dem Ölkreis zirkuliert, und wobei der Ausgangskanal ausgelegt ist, um das Schmieröl in das Gehäuse abzuleiten.

12. Motorsystem nach Anspruch 11, wobei der Ölkreis ferner einen Ölfilter umfasst, der zwischen der Pumpe und dem Motor angeordnet ist,

wobei der Verbinder des Eingangskanals mit dem Ölkreis im Bereich eines Entnahmepunkts verbunden ist, der sich befindet:

- zwischen der Pumpe und dem Ölfilter derart, dass er der Pumpe nachgelagert und dem Motor vorgelagert ist; oder

- zwischen der Pumpe und dem Motor derart, dass er dem Motor nachgelagert und der Pumpe vorgelagert ist.

13. Verfahren zur Überwachung eines Motors (8), das von einem Überwachungssystem (SY1) durchgeführt wird, das mindestens einen Sensor (SN) umfasst und über einen Eingangskanal (12) an einen Ölkreis (C1) des Motors angeschlossen ist, wobei das Verfahren umfasst:

- Messung (S8), durch den mindestens einen Sensor, von ersten Parametern (PR1), die für die Qualität eines Motorschmieröls (OL) repräsentativ sind, das dem Ölkreis über den Eingangskanal entnommen wird, wobei das Öl nach der Messung in den Ölkreis über einen Ausgangskanal (14) des Überwachungssystems abgeleitet wird;

- Analyse (S10), ausgehend von den ersten Parametern (PR1) oder von zweiten Parametern (PR2), die von einer Verarbeitung der ersten Parameter erhalten wurden, um durch Vergleichen der ersten oder zweiten Parameter mit mindestens einem Grenzwert zu bestimmen, ob mindestens eine vorbestimmte Bedingung erfüllt ist; und

- Ermittlung (S16) mindestens einer vorbestimmten Verschlechterung der Qualität des Öls, die für einen anormalen Zustand des Motors repräsentativ ist, wenn die mindestens eine vorbestimmte Bedingung erfüllt ist; wobei die Verarbeitung mindestens eins umfasst von:

- Bestimmung, als zweiten Parameter, einer korrigierten elektrischen Leitfähigkeit ausgehend von der von dem mindestens einen Sensor gemessenen elektrischen Leitfähigkeit durch Anwenden einer ersten finalen Polynomfunktion, wobei die erste finale Polynomfunktion die korrigierte elektrische Leitfähigkeit ausgehend von der elektrischen Leitfähigkeit, der Temperatur, dem Druck und der relativen Feuchtigkeit definiert, die von dem mindestens einen Sensor gemessen wurden, wobei die erste finale Polynomfunktion von ersten Koeffizienten (CFCE) gewichtet wird, die jeweils der Temperatur, dem Druck und der relativen Feuchtigkeit zugeordnet sind, um mindestens zum Teil den jeweiligen Einfluss der Temperatur, des Drucks und der relativen Feuchtigkeit auf die von dem mindestens einen Sensor gemessene elektrische Leitfähigkeit auszugleichen; und

- Bestimmung, als zweiten Parameter, einer korrigierten dielektrischen Konstante ausgehend von der von dem mindestens einen Sensor gemessenen dielektrischen Konstante durch Anwenden einer zweiten finalen Polynomfunktion, wobei die zweite finale Polynomfunktion die korrigierte dielektrische Konstante ausgehend von der dielektrischen Konstante, der Temperatur, dem Druck und der relativen Feuchtigkeit definiert, die von dem mindestens einen Sensor gemessen wurden, wobei die zweite finale Polynomfunktion von zweiten Koeffizienten (CFCD) gewichtet wird, die jeweils der Temperatur, dem Druck und der relativen Feuchtigkeit zugeordnet sind, um mindestens zum Teil den jeweiligen Einfluss der Temperatur, des Drucks und der relativen Feuchtigkeit auf die von dem mindestens einen Sensor gemessene dielektrische Konstante auszugleichen; wobei die Analyse einen Vergleich von mindestens einer von der korrigierten elektrischen Leitfähigkeit und der korrigierten dielektrischen Konstante mit einem jeweiligen Grenzwert umfasst, um zu bestimmen, ob die mindestens eine vorbestimmte Bedingung erfüllt ist.

## Claims

1. A monitoring system (SY1) for monitoring an engine (6) comprising:

- a sensor unit (U1) connected to an inlet line (12) and an outlet line (12), the inlet line includes a hydraulic pipe connector (18) set up to connect to one of the engine's oil circuits (C1), This sensor unit has at least one sensor (SN) set up to measure first parameters (PR1) representing the quality of an engine lubricating oil (OL) taken from the oil circuit via the inlet line, the outlet line is adapted to discharge the oil from the sensor unit into the oil circuit;
- an analysis unit (U2) configured to determine, from the first parameters (PR1) or second parameters (PR2) obtained by processing the first parameters, whether at least one predefined condition (CN) is met, by comparing these first or second parameters with at least one threshold value (SL); and
- a detection unit (U3) configured to detect a degradation (EVT) of the oil quality representative of an abnormal state of the engine, if at least one predefined condition is met;

wherein the processing performed by the analysis unit (U2) performs at least one of the following:

- determining, as a second parameter, a corrected electrical conductivity from the electrical conductivity measured by at least one sensor by applying a first final polynomial function. The first final polynomial function defines this corrected electrical conductivity from the electrical conductivity, the temperature pressure and relative humidity measured by at least one sensor, this first final polynomial function is weighted by first coefficients (CFCE) associated respectively with the temperature, pressure and relative humidity to compensate at least in part for the respective influence of the temperature, pressure and relative humidity on the electrical conductivity measured by at least one sensor; and
- determining, as a second parameter, a corrected dielectric constant from the dielectric constant measured by at least one sensor by applying a second final polynomial function. The second final polynomial function defines the corrected dielectric constant from the dielectric constant, temperature, pressure and relative humidity measured by at least one sensor, this second final polynomial function is weighted by second coefficients (CFCD) associated respectively with the temperature, the pressure and the relative humidity in order to compensate at least in part for the respective influence of the temperature, the pressure and the relative humidity on the dielectric constant measured by at least one sensor;

wherein the analysis module is configured to compare at least one of the corrected electrical conductivity and the corrected dielectric constant with a respective threshold to determine whether at least one predefined condition is met.

2. System pursuant to claim 1, including:

- a control unit (U4) configured to initiate at least one predefined action (AT) to secure the engine when it detects at least form of deterioration in the oil quality.

3. The system pursuant to claim 2, wherein at least one action comprises at least any one of:

- sending or presenting a notification (NF) representative of oil quality degradation; and
- initiating a command (CMD2) from a control unit (U10) to change at least one engine operating setting.

4. The system pursuant to any one of claims 1 to 3, wherein the first parameters measured by at least one sensor include the following parameters:

- electrical conductivity of the oil;
- dielectric constant of the oil;
- temperature of the oil;
- oil pressure; and
- relative humidity of the oil.

5. System pursuant to any one of claims 1 to 4, wherein the first parameters include at least one parameter characterizing metallic particles that may be found in the oil.

6. System pursuant to any one of claims 1 to 5, wherein the analysis module is set up to establish the corrected electrical conductivity and the corrected dielectric constant after this processing, at least one predefined condition with the following conditions:

- the corrected electrical conductivity reaches a first threshold; and
- the corrected dielectric constant reaches a second threshold.

7. System pursuant to any one of claims 1 to 6, including a calibration unit (U5) configured to determine, prior to this analysis, the first and second coefficients weighting respectively the first and second final polynomial functions. This calibration unit is configured to perform the following steps:

- determining a first polynomial function f1CE-T representing the change in the electrical conductivity measured by at least one sensor as a function of the temperature measured by at least one sensor;
- determining a first polynomial function f1CE-P representing the change in the electrical conductivity measured by at least one sensor as a function of the pressure measured by at least one sensor;
- determining a first polynomial function f1CE- HR representing the change in the electrical conductivity measured by at least one sensor as a function of the relative humidity measured by at least one sensor;
- determining a first polynomial function f1CD-T representing the change in the dielectric constant measured by at least one sensor as a function of the temperature measured by at least one sensor;
- determining a first polynomial function f1CD-P representing the change in the dielectric constant measured by at least one sensor as a function of the pressure measured by at least one sensor;
- determining a first polynomial function f1CD- HR representing the change in the dielectric constant measured by at least one sensor as a function of the relative humidity measured by at least one sensor;
- using the first polynomial function f1CE-T to determine a second polynomial function f2CE-T defining a correction CRCE-T of the electrical conductivity as a function of the temperature. This second polynomial function f2CE-T is weighted by the first coefficients defining the correction CRCE-T so that it is zero at a reference temperature;
- using the first polynomial function f1CE-P to determine a second polynomial function f2CE-P defining a correction CRCE-P of the electrical conductivity as a function of the pressure. This second polynomial function f2CE-P is weighted by the first coefficients defining the correction so that it is zero at a reference pressure;
- using the first polynomial function f1CE-HR to determine a second polynomial function f2CE-HR defining a correction CRCE-HR of the electrical conductivity as a function of the relative humidity. This second polynomial function f2CE-HR is weighted by the first coefficients defining the correction so that it is zero at a reference relative humidity;
- using the first polynomial function f1CD-T to determine a second polynomial function f2CD-T defining a correction CRCD-T of the dielectric constant as a function of temperature. This second polynomial function f2CD-T is weighted by the second coefficients defining the correction so that it is zero at the reference temperature;
- using the first polynomial function f1CD-P to determine a second polynomial function f2CD-P defining a correction CRCD-P of the dielectric constant as a function of pressure. This second polynomial function f2CD-P is weighted by the second coefficients defining the correction so that it is zero at the reference pressure; and
- using the first polynomial function f1CD-HR to determine a second polynomial function f2CD-HR defining a CRCD-HR correction of the dielectric constant as a function of the relative humidity. This second polynomial function f2CD-HR is weighted by the second coefficients defining this correction so that it is zero at the reference relative humidity;

wherein the analysis module is set up to apply these first and second coefficients in the final first and second polynomial functions, respectively, to determine the corrected electrical conductivity and the corrected dielectric constant as second parameters after processing.

8. System pursuant to any one of claims 1 to 7, wherein the analysis module is configured to perform during a learning phase:

- determining a corrected initial electrical conductivity and a corrected initial dielectric constant from, respectively, the electrical conductivity and the dielectric constant measured by at least one sensor in a reference state of the oil circuit;

wherein the analysis module is further configured to perform, during this processing:

- calculating a first deviation between a corrected electrical conductivity determined at a current time from the corrected initial electrical conductivity and a second deviation between a corrected dielectric constant determined at a current time from the corrected initial dielectric constant; and
- determining that at least one predefined condition is met if at least one of the first and second deviations reaches a predefined threshold.

9. System pursuant to claim 8, wherein:

- if the first deviation reaches a first predefined minimum threshold, the detection module is configured to detect, as a deterioration of oil quality, an abnormal viscosity level of the oil;
- if the first deviation reaches a second predefined maximum threshold, the detection module is configured to detect, as a deterioration of the quality of the oil, a fuel pollution of the oil;
- if the second deviation reaches a third predefined minimum threshold, the detection module is configured to detect, as a deterioration of the quality of the oil, soot pollution of the oil; and
- if the second deviation reaches a fourth predefined maximum threshold, the detection module is configured to detect, as a deterioration of the oil quality, an anomalous alkalinity level of the oil.

10. System pursuant to claim 8 or 9, wherein:

- if the first deviation reaches a fifth predefined maximum threshold and if the second deviation reaches a sixth predefined minimum threshold, the detection module is configured to detect, as a deterioration of the oil quality, a light fuel oil pollution of the oil;
- if the first deviation reaches a predefined maximum seventh threshold and the second deviation reaches a predefined maximum eighth threshold, the detection module is configured to detect as a deterioration of the oil quality a heavy fuel pollution of the oil; and
- if the relative humidity reaches a ninth predefined maximum threshold, if the first deviation reaches a tenth predefined maximum threshold and if the second deviation reaches an eleventh predefined maximum threshold, the detection module is configured to detect, as a deterioration of the quality of the oil, an anomalous iron content of the oil.

11. Engine system (2), including:

- an oil circuit with an engine, a pump for injecting an engine lubricating oil into this engine, and a sump for collecting the engine lubricating oil discharged from the engine; and
- a monitoring system as defined under claims 1 to 10, the connector of the inlet line is connected to the oil circuit so as to sample engine lubricating oil flowing in this oil circuit, and wherein the outlet line is configured to discharge the lubricating oil into the sump.

12. The engine system of claim 11, wherein the oil circuit further comprises an oil filter positioned between the pump and the engine,
the connector of the inlet line is connected to the oil circuit at a tapping point located:

- between the pump and the oil filter so as to be downstream of the pump and upstream of the engine; or
- between the pump and the engine so as to be downstream of the engine and upstream of the pump.

13. A method for monitoring an engine (8), implemented by a monitoring system (SY1) comprising at least one sensor (SN) and being connected via an inlet line (12) to one of the engine's oil circuits (C1), this method does the following:

- measuring (S8), by at least one sensor, first parameters (PR1) representing the quality of an engine lubricating oil (OL) taken from the oil circuit via the inlet pipe. The oil is discharged after the measurement into the oil circuit via an outlet pipe (14) of the monitoring system;
- an analysis (S10) based on the first parameters (PR1) or second parameters (PR2) obtained by processing the first parameters to determine whether at least one predefined condition is met, by comparing these first or second parameters with at least one threshold value; and
- Detection (S16) of at least one predefined deterioration of the oil quality representative of an abnormal state of the engine if at least one predefined condition is met;

wherein the processing performed includes at least one of the following:

- determining, as a second parameter, a corrected electrical conductivity from the electrical conductivity measured by at least one sensor by applying a first final polynomial function. The first final polynomial function defines this corrected electrical conductivity from the electrical conductivity, the temperature pressure and relative humidity measured by at least one sensor, this first final polynomial function is weighted by first coefficients (CFCE) associated respectively with the temperature, pressure and relative humidity to compensate at least in part for the respective influence of the temperature, pressure and relative humidity on the electrical conductivity measured by at least one sensor; and
determining, as a second parameter, a corrected dielectric constant from the dielectric constant measured by at least one sensor by applying a second final polynomial function, the second final polynomial function defines the corrected dielectric constant based on the dielectric constant, the temperature, pressure and relative humidity measured by at least one sensor. This second final polynomial function is weighted by second coefficients (CFCD) associated respectively with the temperature, pressure and relative humidity to compensate at least in part for the respective influence of the temperature, pressure and relative humidity on the dielectric constant measured by at least one sensor;
- wherein the analysis compares at least one of the corrected electrical conductivity and the corrected dielectric constant with a respective threshold to determine whether at least one predefined condition is met.

[Fig. 1]

[Fig. 2]

[Fig. 3]

[Fig. 4]

[Fig. 5]

[Fig. 6]

[Fig. 7]

[Fig. 8]

[Fig. 9]

[Fig. 10]

[Fig. 11]

EP 4 041 997 B1

[Fig. 12]

[Fig. 13]

```
         ┌─────────────────────────────────────────────┐
         │           DÉTERMINATION PREMIÈRE            │
S30 ─────│ FONCTION POLYNOMIALE f1CE-T : ÉVOLUTION CE EN │
         │         FONCTION DE TEMPÉRATURE T           │
         └─────────────────────────────────────────────┘
                             │
                             ▼
         ┌─────────────────────────────────────────────┐
         │   CALCUL DÉVIATION DEV3 DE LA CONDUCTIVITÉ   │
S32 ─────│ ÉLECTRIQUE CE VIS À VIS DE LA TEMPÉRATURE DE │
         │             RÉFÉRENCE TREF                  │
         └─────────────────────────────────────────────┘
                             │
                             ▼
         ┌─────────────────────────────────────────────┐
         │           DÉTERMINATION DEUXIÈME            │
S34 ─────│ FONCTION POLYNOMIALE f2CE-T : ÉVOLUTION DÉVIATION │
         │       DE CE EN FONCTION DE TEMPÉRATURE T    │
         └─────────────────────────────────────────────┘
                             │
                             ▼
         ┌─────────────────────────────────────────────┐
         │       OBTENTION DES COÉFFICIENTS CFCE-T     │
S36 ─────│ DÉFINISSANT LA CORRECTION DE LA CONDUCTIVITÉ │
         │     ÉLECTRIQUE CE DANS f3CE EN FONCTION DE LA │
         │                TEMPÉRATURE T                │
         └─────────────────────────────────────────────┘
```

EP 4 041 997 B1

[Fig. 14]

45

[Fig. 15]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5964318 A